# EUROPEAN PATENT APPLICATION

(11) **EP 4 585 478 A1**
(43) Date of publication of application: **16.07.2025**
(21) Application number: 22960333.7
(22) Date of filing: 30.09.2022
(51) Int. Cl.: B60T 8/17, B60T 13/58

(54) **BRAKING SYSTEM, HYDRAULIC DEVICE AND CONTROL METHOD**

(71) Applicant: Shenzhen Yinwang Intelligent Technologies Co., Ltd., Shenzhen, Guangdong 518129 (CN)
(72) Inventor: JIN, Biao, Shenzhen, Guangdong 518129 (CN); ZHANG, Yongsheng, Shenzhen, Guangdong 518129 (CN); YANG, Weimiao, Shenzhen, Guangdong 518129 (CN); LIU, Donghao, Shenzhen, Guangdong 518129 (CN)
(74) Representative: Thun, Clemens
(86) International application number: PCT/CN2022/123360
(87) International publication number: WO 2024/065714

(57) **Abstract**

A braking system, a hydraulic apparatus, and a control method are provided. The braking system includes a first hydraulic apparatus (140), a second hydraulic apparatus (150), a first control unit (110), a second control unit (120), a third control unit (130), and a mechanical actuation unit (160). In the braking system, the first hydraulic apparatus (140) is configured to brake a first front wheel of a vehicle, the second hydraulic apparatus (150) is configured to brake a second front wheel of the vehicle, and the mechanical actuation unit (160) is configured to brake a rear wheel of the vehicle. This effectively improves braking efficiency of the vehicle. Because the first hydraulic apparatus (140) and the second hydraulic apparatus (150) are connected through a hydraulic pipe, when the first control unit (110) fails, the second control unit (120) may control the first hydraulic apparatus (140) to implement redundant braking of the first front wheel of the vehicle, to avoid yawing during braking of the vehicle. In addition, integration of the first hydraulic apparatus (140) and the second hydraulic apparatus (150) is high. This helps reduce complexity of adding redundancy backup to the braking system, and reduce difficulty of vehicle mounting and arrangement.

## Description

### TECHNICAL FIELD

This application relates to the field of braking technologies, and provides a braking system, a hydraulic apparatus, and a control method.

### BACKGROUND

A braking system is one of the most important systems in an intelligent transportation device, and is related to life safety and property safety of a driver and a passenger. For example, when an obstacle exists in front of the intelligent transportation device and barking is needed, if the braking system fails, the intelligent transportation device may collide with the obstacle because the intelligent transportation device cannot be braked in time, seriously affecting safety of the driver and the passenger. Therefore, a safe and reliable braking system is quite important for the intelligent transportation device.

To improve safety and reliability of the braking system, it is usually necessary to add redundancy backup to the braking system. The redundancy backup means that when an original braking function is faulty, braking can still be implemented in another manner. In some technical solutions, a set including a redundant pressure control unit and a corresponding electronic control unit is directly added to the braking system. When an original pressure control unit and electronic control unit are faulty, the braking system switches to the set including the redundant pressure control unit and the electronic control unit to complete redundancy backup, to implement redundant braking of the braking system. However, it is clear that this redundancy backup manner greatly increases a quantity of components included in the braking system, and further increases difficulty of vehicle mounting and arrangement. This is not conducive to reducing integration complexity of the braking system.

Therefore, how to reduce complexity of adding redundant braking to the braking system and improve integration of the braking system is a technical problem that a person skilled in the art urgently needs to resolve.

### SUMMARY

This application provides a braking system, a hydraulic apparatus, and a control method, to reduce complexity of adding redundancy backup to a braking system and improve integration of the braking system.

According to a first aspect, an embodiment of this application provides a braking system, where the braking system includes a first hydraulic apparatus, a second hydraulic apparatus, a first control unit, a second control unit, a third control unit, and a mechanical actuation unit. The first hydraulic apparatus and the second hydraulic apparatus are connected through a hydraulic pipe, the first hydraulic apparatus is configured to brake a first front wheel of a vehicle, the second hydraulic apparatus is configured to brake a second front wheel of the vehicle, and the mechanical actuation unit is configured to brake a rear wheel of the vehicle. The first control unit is configured to control the first hydraulic apparatus; the second control unit is configured to control the second hydraulic apparatus; and the third control unit is configured to control the mechanical actuation unit.

In the braking system provided in this embodiment of this application, the first hydraulic apparatus implements braking of the first front wheel of the vehicle, the second hydraulic apparatus implements braking of the second front wheel of the vehicle, and the mechanical actuation unit implements braking of the rear wheel of the vehicle, so that braking efficiency of the vehicle can be effectively improved. In addition, the first hydraulic apparatus and the second hydraulic apparatus are connected through the hydraulic pipe. When the first control unit fails, the second control unit may control the first hydraulic apparatus to implement braking of the first front wheel of the vehicle, to implement redundancy backup of the braking system. This effectively avoids yawing during braking of the vehicle, and effectively improves braking safety of the vehicle. Because it is easy to dispose the first hydraulic apparatus and the second hydraulic apparatus on a front axle of the vehicle, and there is no need to additionally dispose a new set including a pressure control unit and a corresponding electronic control unit, complexity of adding the redundancy backup to the braking system can be effectively reduced. In addition, integration of the first hydraulic apparatus and the second hydraulic apparatus is high, which can effectively improve integration of the braking system. It can be learned that the foregoing design can further improve a redundant braking capability of the braking system on the basis of saving costs and reducing layout complexity of the entire vehicle. In addition, the first hydraulic apparatus and the second hydraulic apparatus are connected through the hydraulic pipe, so that wheel cylinder isolation is implemented.

In a possible implementation, the first hydraulic apparatus and the second hydraulic apparatus may be electro-hydraulic brakes (Electro-Hydraulic Brake, EHB), and the mechanical actuation unit may be an electro-mechanical brake (Electro-Mechanical Brake, EMB).

In this embodiment of this application, the first hydraulic apparatus and the second hydraulic apparatus are connected through the hydraulic pipe in a plurality of implementations, including but not limited to the following manners.

Manner 1: A first control valve in the first hydraulic apparatus is connected to the second hydraulic apparatus through the hydraulic pipe.

Manner 2: The first hydraulic apparatus is connected to a second control valve in the second hydraulic apparatus through the hydraulic pipe.

In the manner 1 and the manner 2, the first hydraulic apparatus and the second hydraulic apparatus may share one control valve, so that a quantity of components in the braking system can be further reduced, and complexity of the braking system can be reduced.

Manner 3: A first control valve in the first hydraulic apparatus is connected to a second control valve in the second hydraulic apparatus through the hydraulic pipe.

In the manner 3, the first hydraulic apparatus and the second hydraulic apparatus are each provided with a control valve, so that control of the first hydraulic apparatus by the first control unit and control of the second hydraulic apparatus by the second control unit are simple and easy to implement.

The first control valve and the second control valve may be solenoid normally open valves.

In a possible design, that the first control unit controls the first hydraulic apparatus includes: The first control unit controls the first control valve to close; and/or that the second control unit controls the second hydraulic apparatus includes: The second control unit controls the second control valve to close. In this design, one or both of the first control valve and the second control valve may be controlled to close, so that the first hydraulic apparatus brakes the first front wheel and the second hydraulic apparatus brakes the second front wheel.

In a possible design, the second control unit is further configured to control the first hydraulic apparatus and the second hydraulic apparatus when the first control unit fails. In this design, the second control unit may control the first hydraulic apparatus and the second hydraulic apparatus when the first control unit fails, to implement braking of the first front wheel and the second front wheel, that is, implement redundant braking of the braking system, and effectively improve security and reliability of the braking system.

In a possible design, the first hydraulic apparatus includes a third control valve. The third control valve includes dual coils, one coil in the dual coils is connected to the first control unit, and the other coil in the dual coils is connected to the second control unit. That the second control unit controls the first hydraulic apparatus when the first control unit fails includes: When the first control unit fails, the second control unit controls the third control valve to close. In this design, the third control valve including the dual coils is disposed in the first hydraulic apparatus. One coil in the dual coils is connected to the first control unit, and the other coil is connected to the second control unit, so that when the first control unit fails, the second control unit controls the third control valve to close, to implement redundant braking of the first front wheel. Similarly, the second hydraulic apparatus may include a fourth control valve. The fourth control valve includes dual coils, one coil in the dual coils is connected to the first control unit, and the other coil in the dual coils is connected to the second control unit. When the second control unit fails, the first control unit may control the fourth control valve to close, to implement redundant braking of the second front wheel.

In a possible design, the first control valve in the first hydraulic apparatus includes dual coils, one coil in the dual coils is connected to the first control unit, and the other coil in the dual coils is connected to the second control unit. That the second control unit controls the first hydraulic apparatus when the first control unit fails includes: When the first control unit fails, the second control unit controls the first control valve to close. In this design, the first control valve includes dual coils, one coil in the dual coils is connected to the first control unit, and the other coil is connected to the second control unit, so that when the first control unit fails, the second control unit controls the first control valve to close, to implement redundant braking of the first front wheel. In addition, the first control valve is a solenoid valve controlled by the first control unit when braking the first front wheel. In other words, both redundant braking and normal braking of the first front wheel may be implemented by controlling the first control valve, and the third control valve does not need to be disposed in the first hydraulic apparatus. This further reduces a quantity of components in the braking system, and effectively reduces the complexity of redundancy backup of the braking system.

In a possible design, the first control unit is further configured to: identify a braking intention of a driver, and send the braking intention to the third control unit; and that the third control unit controls the mechanical actuation unit includes: The third control unit receives the braking intention from the first control unit, and controls the mechanical actuation unit in response to the braking intention. Alternatively, the second control unit is further configured to: when the first control unit fails, identify a braking intention of a driver, and send the braking intention to the third control unit; and that the third control unit controls the mechanical actuation unit includes: The third control unit receives the braking intention from the second control unit, and controls the mechanical actuation unit in response to the braking intention. In this design, both the first control unit and the second control unit can identify the braking intention, to implement backup of the braking intention. For example, when the first control unit fails, the second control unit may obtain the braking intention, and send the braking intention to the third control unit. In this way, a case in which the braking intention is not identified can be effectively reduced, and security of the braking system can be further improved.

In this embodiment of this application, the first control unit identifies the braking intention of the driver in a plurality of implementations, including but not limited to the following manners.

Manner 1: The first control unit obtains a first sensor signal of a braking pedal in the braking system, and identifies the braking intention based on the first sensor signal.

In the manner 1, the first control unit may identify the braking intention based on the first sensor signal collected by the first control unit, so that efficiency of identifying the braking intention is high.

Manner 2: That the first control unit identifies a braking intention of a driver includes: The first control unit obtains a first sensor signal of a braking pedal and receives a second sensor signal, and identifies the braking intention based on the first sensor signal and the second sensor signal. The second sensor signal is collected by the second control unit at the braking pedal in the braking system.

In the manner 2, the first control unit identifies the braking intention of the driver based on the first sensor signal collected by the first control unit and the second sensor signal collected by the second control unit. Because the first control unit may check the first sensor signal and the second sensor signal, the braking intention identified by the first control unit is accurate.

Optionally, the first sensor signal may be a digital signal of a pressure sensor of the braking pedal, and the second sensor signal may be a voltage signal of the pressure sensor of the braking pedal.

In a possible design, that the second control unit identifies a braking intention of a driver when the first control unit fails includes: When the first control unit fails, the second control unit obtains a second sensor signal of a braking pedal in the braking system, and identifies the braking intention based on the second sensor signal. In this design, when the first control unit fails, the second control unit may identify the braking intention based on the second sensor signal collected by the second control unit, so that the second control unit can easily identify the braking intention.

In a possible design, the third control unit includes a controller of the vehicle. In this design, the third control unit reuses the controller (for example, a vehicle identification unit (Vehicle Identification Unit, VIU) or a vehicle domain controller (Vehicle domain Controller, VDC)) of the vehicle, to reduce the quantity of components in the braking system, reduce complexity of the braking system, and effectively reduce development costs.

In a possible design, the third control unit and the mechanical actuation unit are integrated or disposed independently. In this design, a plurality of implementations of the third control unit and the mechanical actuation unit are provided, so that the third control unit and the mechanical actuation unit can be flexibly implemented.

In a possible design, the braking system further includes an oil can, a master cylinder module, the braking pedal, a push rod, and a pedal simulator. The braking pedal is connected to the master cylinder module through the push rod, one end of the master cylinder module is connected to the oil can through a hydraulic pipe, the other end of the master cylinder module is separately connected to the first hydraulic apparatus and the second hydraulic apparatus through hydraulic pipes, one end of the pedal simulator is connected to the oil can through a hydraulic pipe, and the other end of the pedal simulator is connected to the master cylinder module through a hydraulic pipe. The first hydraulic apparatus or the second hydraulic apparatus is further configured to control oil in the master cylinder module to flow into the pedal simulator. In this design, the first hydraulic apparatus or the second hydraulic apparatus may control the oil in the master cylinder module to flow into the pedal simulator, so that a feeling of the driver for stepping on the pedal for braking can be maintained unchanged, and driving experience of the driver is effectively improved.

In a possible design, the braking system further includes the pedal simulator. The pedal simulator is integrated into the first hydraulic apparatus or the second hydraulic apparatus, or the pedal simulator is disposed independently of the first hydraulic apparatus and the second hydraulic apparatus. In this design, a plurality of implementations are provided for the pedal simulator in the braking system, so that the pedal simulator in the braking system can be flexibly implemented.

In a possible design, a pressure building manner of the first hydraulic apparatus controlled by the first control unit is the same as or different from a pressure building manner of the second hydraulic apparatus controlled by the second control unit. In this design, pressure building manners of the first hydraulic apparatus and the second hydraulic apparatus may be the same or different, so that the braking system provided in this embodiment of this application can meet braking requirements in different scenarios.

In a possible design, the pressure building manner includes unidirectional pressure building or bidirectional pressure building. In this design, the pressure building manner includes the unidirectional pressure building or the bidirectional pressure building, so that the first hydraulic apparatus and the second hydraulic apparatus can flexibly build pressure. The bidirectional pressure building can effectively improve a pressure building rate, effectively improve a braking rate, and effectively improve the reliability of the braking system.

According to a second aspect, an embodiment of this application further provides a hydraulic apparatus. The hydraulic apparatus includes a booster, and the booster includes a first interface, a second interface, a third interface, and a fourth interface. The first interface is configured to connect the booster to a wheel cylinder, the second interface is configured to connect the booster to a master cylinder, the third interface is configured to connect the booster to an oil can, and the fourth interface is configured to connect the booster to another hydraulic apparatus. In this embodiment of this application, a plurality of interfaces are disposed in the booster of the hydraulic apparatus, and the booster may be connected to a hydraulic component (for example, the wheel cylinder, the master cylinder, or the oil can) in a braking system and the another hydraulic apparatus through these interfaces. Because the hydraulic apparatus is integrated software, the hydraulic apparatus is disposed in the braking system, to effectively improve integration of the braking system and reduce complexity of the braking system.

In a possible design, the booster includes a motor, an electric cylinder, a piston, a control valve MC-NO1, an electric cylinder normally closed valve PNC1, and a booster valve ISO1. The booster valve ISO1 is connected to the control valve MC-NO1, one end of the electric cylinder normally closed valve PNC1 is separately connected to the booster valve ISO1 and the control valve MC-NO1, and the other end of the electric cylinder normally closed valve PNC1 is connected to the electric cylinder. The motor is connected to the electric cylinder, the piston is disposed in the electric cylinder, and the motor is configured to control the piston to move in the electric cylinder. Correspondingly, that the first interface is configured to connect the booster to a wheel cylinder includes: The booster valve ISO is connected to the wheel cylinder through the first interface. That the second interface is configured to connect the booster to a master cylinder includes: The control valve MC-NO1 is connected to the master cylinder through the second interface. That the third interface is configured to connect the booster to an oil can includes: The electric cylinder is connected to the oil can through the third interface. That the fourth interface is configured to connect the booster to another hydraulic apparatus includes: The control valve MC-NO1 is connected to the another hydraulic apparatus through the fourth interface. In this design, the booster includes the motor, the electric cylinder, the piston, the control valve MC-NO1, the electric cylinder normally closed valve PNC1 and the booster valve ISO1, and each booster is connected to a component in the braking system through a corresponding interface.

In a possible design, the booster includes a motor, an electric cylinder, a piston, a first control valve HCU-NO1, a third control valve MC-NO1, an electric cylinder normally closed valve PNC1, and a booster valve ISO. The booster valve ISO1 is separately connected to the first control valve HCU-NO1 and the third control valve MC-NO1, one end of the electric cylinder normally closed valve PNC1 is separately connected to the booster valve ISO1, the first control valve HCU-NO1, and the third control valve MC-NO1, and the other end of the electric cylinder normally closed valve PNC1 is connected to the electric cylinder. The motor is connected to the electric cylinder, the piston is disposed in the electric cylinder, and the motor is configured to control the piston to move in the electric cylinder. Correspondingly, that the first interface is configured to connect the booster to a wheel cylinder includes: The booster valve ISO is connected to the wheel cylinder through the first interface. That the second interface is configured to connect the booster to a master cylinder includes: The third control valve MC-NO1 is connected to the master cylinder through the second interface. That the third interface is configured to connect the booster to an oil can includes: The electric cylinder is connected to the oil can through the third interface. That the fourth interface is configured to connect the booster to another hydraulic apparatus includes: The first control valve HCU-NO1 is connected to the another hydraulic apparatus through the fourth interface. In this design, the booster includes the motor, the electric cylinder, the piston, the first control valve HCU-NO1, the third control valve MC-NO1, the electric cylinder normally closed valve PNC1, and the booster valve ISO, and each booster is connected to a component in the braking system through a corresponding interface.

In a possible design, the hydraulic apparatus further includes a braking circuit pressure sensor BCPS, a motor position sensor MPS, and a pressure reducing valve. The braking circuit pressure sensor BCPS is connected to the electric cylinder, the motor position sensor MPS is connected to the motor, and the pressure reducing valve is connected to the wheel cylinder. In this design, the braking circuit pressure sensor BCPS, the motor position sensor MPS, and the pressure reducing valve are disposed in the hydraulic apparatus, so that the hydraulic apparatus can implement a pressure building operation during braking.

According to a third aspect, an embodiment of this application further provides a vehicle, including the braking system according to the first aspect or any one of the possible designs of the first aspect, or including the hydraulic apparatus according to the second aspect or any one of the possible designs of the second aspect.

According to a fourth aspect, an embodiment of this application further provides a control method, applied to a braking system. The braking system includes a first hydraulic apparatus, a second hydraulic apparatus, a first control unit, and a second control unit. The first hydraulic apparatus and the second hydraulic apparatus are connected through a hydraulic pipe, the first hydraulic apparatus is configured to brake a first front wheel of a vehicle, and the second hydraulic apparatus is configured to brake a second front wheel of the vehicle. The method includes: When the first control unit fails, the second control unit controls the first hydraulic apparatus and the second hydraulic apparatus to complete braking operations on the first front wheel and the second front wheel.

In the method, when the first control unit fails, the second control unit may control the first hydraulic apparatus and the second hydraulic apparatus to complete the braking operations on the first front wheel and the second front wheel. In this way, redundant braking of the first front wheel can be implemented, and braking safety of the vehicle can be effectively improved.

In a possible design, that the first hydraulic apparatus and the second hydraulic apparatus are connected through a hydraulic pip includes: A first control valve HCU-NO1 in the first hydraulic apparatus is connected to a second control valve HCU-NO2 in the second hydraulic apparatus through the hydraulic pipe.

In a possible design, the first hydraulic apparatus includes the first control valve HCU-NO1, and the second hydraulic apparatus includes the second control valve HCU-NO2. That the first hydraulic apparatus and the second hydraulic apparatus are connected through a hydraulic pip includes: The first control valve HCU-NO1 in the first hydraulic apparatus is connected to the second control valve HCU-NO2 in the second hydraulic apparatus through the hydraulic pipe.

In a possible design, the first control valve in the first hydraulic apparatus includes dual coils, one coil in the dual coils is connected to the first control unit, and the other coil in the dual coils is connected to the second control unit. That the second control unit controls the first hydraulic apparatus and the second hydraulic apparatus includes: The second control unit controls the first control valve and the second control valve to close.

In a possible design, the first hydraulic apparatus further includes a third control valve MC-NO1. The third control valve includes dual coils, one coil in the dual coils is connected to the first control unit, and the other coil in the dual coils is connected to the second control unit. That the second control unit controls the first hydraulic apparatus and the second hydraulic apparatus includes: The second control unit controls the third control valve and the second control valve HCU-NO2 to close.

In a possible design, the braking system further includes a third control unit and a mechanical actuation unit. The third control unit is configured to control the mechanical actuation unit, and the mechanical actuation unit is configured to brake a rear wheel of the vehicle. The method further includes: The first control unit identifies a braking intention of a driver, and sends the braking intention to the third control unit; or when the first control unit fails, the second control unit identifies a braking intention of a driver, and sends the braking intention to the third control unit.

In a possible design, that the first control unit controls the first hydraulic apparatus to complete the braking operation on the first front wheel includes: The first control unit controls the first control valve HCU-NO1 to close, controls the motor in the first hydraulic apparatus to rotate, and controls the electric cylinder normally closed valve PNC1 in the first hydraulic apparatus to open, to complete the braking operation on the first front wheel. That the second control unit controls the second hydraulic apparatus includes: The second control unit controls the second control valve HCU-NO2 to close, controls the motor in the second hydraulic apparatus to rotate, and controls the electric cylinder normally closed valve PNC2 in the second hydraulic apparatus to open, to complete the braking operation on the second front wheel.

According to a fifth aspect, an embodiment of this application provides a control apparatus, and the apparatus is applied to a braking system. The braking system includes a first hydraulic apparatus, a second hydraulic apparatus, a first control unit, and a second control unit. The first hydraulic apparatus and the second hydraulic apparatus are connected through a hydraulic pipe, the first hydraulic apparatus is configured to brake a first front wheel of a vehicle, and the second hydraulic apparatus is configured to brake a second front wheel of the vehicle.

For example, the apparatus includes a first processing module and a second processing module. The first processing module is configured to: when the first control unit fails, control the first hydraulic apparatus through the second control unit to complete a braking operation on the first front wheel. The first processing module is configured to: when the first control unit fails, control the second hydraulic apparatus through the second control unit to complete a braking operation on the second front wheel.

In a possible design, the first control valve in the first hydraulic apparatus includes dual coils, one coil in the dual coils is connected to the first control unit, and the other coil in the dual coils is connected to the second control unit. The first processing module is specifically configured to control, through the second control unit, the first control valve to close, and the second processing module is specifically configured to control, through the second control unit, the second control valve to close.

In a possible design, the first hydraulic apparatus further includes a third control valve. The third control valve includes dual coils, one coil in the dual coils is connected to the first control unit, and the other coil in the dual coils is connected to the second control unit. The first processing module is specifically configured to control, through the second control unit, the third control valve to close, and the second processing module is specifically configured to control, through the second control unit, the second control valve to close.

In a possible design, the braking system further includes a third control unit and a mechanical actuation unit. The third control unit is configured to control the mechanical actuation unit, and the mechanical actuation unit is configured to brake a rear wheel of the vehicle. The method further includes: The first processing module is further configured to: identify, through the first control unit, a braking intention of a driver, and send the braking intention to the third control unit; or the second processing module is further configured to: when the first control unit fails, identify, through the second control unit, a braking intention of a driver, and send the braking intention to the third control unit.

It may be understood that the first processing module and the second processing module may be integrated into one processor, or may separately correspond to one or more processors.

According to a sixth aspect, an embodiment of this application provides a control apparatus, including at least one processor. The at least one processor is coupled to at least one memory; and the at least one processor is configured to execute a computer program or instructions stored in the at least one memory, so that the apparatus performs the method according to the fourth aspect or any one of the possible designs of the fourth aspect.

According to a seventh aspect, an embodiment of this application provides a computer-readable storage medium. The computer-readable storage medium stores a computer program or instructions, and when a computer reads and executes the computer program or the instructions, the computer is enabled to perform the method according to the fourth aspect and any one of the possible designs of the fourth aspect.

For details of beneficial effect of the third aspect to the fifth aspect, refer to technical effect that can be achieved by corresponding designs in the first aspect and the second aspect. Details are not described herein again.

### BRIEF DESCRIPTION OF DRAWINGS

FIG. 1 is an example diagram of a structure of a braking system according to an embodiment of this application;
FIG. 2 is an example diagram of mounting a braking system in a vehicle according to an embodiment of this application;
FIG. 3 is an example diagram of a structure of another braking system according to an embodiment of this application;
FIG. 4 is an example diagram of a structure of another braking system according to an embodiment of this application;
FIG. 5 is an example diagram of structure of another braking system according to an embodiment of this application;
FIG. 6 is an example diagram of a structure of another braking system according to an embodiment of this application;
FIG. 7 is an example diagram of a structure of another braking system according to an embodiment of this application;
FIG. 8 is an example diagram of a structure of bidirectional pressure building of a braking system according to an embodiment of this application; and
FIG. 9 is an example diagram of a structure of another braking system according to an embodiment of this application.

### DESCRIPTION OF EMBODIMENTS

It should be noted that the terms "system" and "network" may be used interchangeably in embodiments of this application. "A plurality of" refers to two or more than two. "And/or" describes an association relationship between associated objects, and represents that three relationships may exist. For example, A and/or B may represent the following cases: A exists alone, both A and B exist, and B exists alone, where A and B may be singular or plural. "One or more of the following items (pieces)" or a similar expression thereof refers to any combination of these items, including any combination of singular items (pieces) or plural items (pieces). For example, one or more of a, b, or c may indicate a, b, c, a and b, a and c, b and c, or a, b, and c, where a, b, and c may be singular or plural.

Unless otherwise specified, ordinal numbers such as "first" and "second" mentioned in embodiments of this application are used to distinguish a plurality of objects, but are not used to limit priorities or importance degrees of the plurality of objects. For example, a first electronic control unit and a second electronic control unit are merely used to distinguish between different electronic control units, but do not indicate different priorities, importance degrees, or the like of these electronic control units.

Braking functions in embodiments of this application may include but is not limited to one or more of the following functions.

Basic braking function (basic braking function, BBF): The BBF is applicable to a OneBox braking system. The OneBox braking system is a braking system that integrates all braking functions into a single mechanical assembly. In the braking system, a vacuum booster is removed, and a mobile piston cylinder is used for pressurization, to respond to a braking intention of a driver.

Anti-lock braking system (anti-lock braking system, ABS): Usually, when a vehicle is braked in an emergency or on a snow road, wheels of the vehicle tend to lock. Consequently, a braking distance of the vehicle increases, and the vehicle even loses a steering target. The ABS may appropriately reduce, based on a locking status of the wheel, a braking force at the wheel that tends to be lock, to implement an anti-lock function.

Traction control system (traction control system, TCS): Usually, when the vehicle travels on a snow road or a wheel of the vehicle is trapped into a muddy road, the wheel slips. Consequently, the vehicle cannot travel normally. The TCS may appropriately reduce a driving force or apply a braking force to the slipping wheel based on a slipping status of the wheel, to mitigate the slipping of the wheel and ensure normal traveling of the vehicle.

Electronic stability control system (electronic stability control system, ESC): The ESC, also referred to as an electronic stability program (electronic stability program, ESP), may receive vehicle information collected by a sensor, determine an instability status of the vehicle based on the vehicle information, and when determining that the vehicle tends to be unstable, apply a braking force to a single wheel or some wheels, to obtain a yawing moment for stabilizing the vehicle and stabilize the vehicle.

Automatic emergency braking (autonomous emergency braking, AEB): The AEB may detect a distance between the vehicle and a vehicle or an obstacle ahead in a traveling process of the vehicle, and compare a detected distance with an alarm distance and a safety distance (the alarm distance is greater than the safety distance). When the detected distance is less than the alarm distance, an alarm prompt is provided. When the detected distance is less than the safety distance, the vehicle is automatically braked. In this way, even if the driver does not step on a braking pedal in time, traveling safety can be ensured through automatic braking by using the AEB.

Adaptive cruise control (adaptive cruise control, ACC): The ACC is a system in which a function of keeping a proper distance from a vehicle ahead is added to a vehicle that performs cruise control at a specified vehicle speed, and usually has a fixed-speed cruise function, a follow-up cruise function, a curve cruise function, a driving mode selection function, a smart curving function, an intelligent speed limit function, and the like. In addition, a speed of the vehicle may be controlled by using a braking system and a drive system, to implement the foregoing functions.

Value added function (value added function, VAF): The VAF is a general term of other braking functions other than the foregoing several braking functions. Main functions include the following: responding to control request of the ADS/ADAS, providing control interfaces such as ABP, AEB, APA, AWB, CDD Stop&Go, and VLC to meet ADS/ADAS control requirements on vehicle driving and braking, and providing functions such as AVH, BDW, HAZ, HBA, HDC, HFC, HRB and HSA to ensure comfort and safety of driver, applicable to working conditions such as slope, downhill, long-time braking, and braking disc overheating.

Currently, common types of braking systems include an electro-hydraulic brake (Electro-Hydraulic Brake, EHB) system, an electro-mechanical brake (Electro-Mechanical Brake, EMB) system, and a hybrid braking system of the EHB and the EMB. The EHB can brake four wheels of the vehicle, but a pressure building rate during braking of the EHB is insufficient, resulting in insufficient redundancy of the EHB. For example, when a main control unit in the EHB fails, a redundancy unit in the EHB can implement only basic braking and the ABS function, and cannot implement the VAF function. The EHB can implement braking on the four wheels of the vehicle. However, it is difficult to dispose the EMB on rims of front axle wheels of the vehicle, resulting in high arrangement costs. In addition, four motors need to be provided for the EMB to implement braking on the four wheels, and power consumption of the motors is high. A current mainstream 12 V battery system in the vehicle cannot meet power consumption requirements of the motors, and needs to be replaced with a 48 V battery system. In addition, a power supply circuit of another controller in the vehicle needs to be adjusted.

In conclusion, how to reduce complexity of adding redundant braking to the braking system, further reduce difficulty in vehicle mounting and arrangement, and improve safety of the braking system is a technical problem that needs to be urgently resolved by a person skilled in the art.

In view of this, this application provides a braking system, a hydraulic apparatus, and a control method. In the braking system, a first hydraulic apparatus implements braking of a first front wheel of a vehicle, a second hydraulic apparatus implements braking of a second front wheel of the vehicle, and a mechanical actuation unit implements braking of a rear wheel of the vehicle, so that braking efficiency of the vehicle can be effectively improved. In addition, the first hydraulic apparatus and the second hydraulic apparatus are connected through a hydraulic pipe. When a first control unit fails, a second control unit may control the first hydraulic apparatus to implement braking of the first front wheel of the vehicle, to implement redundancy backup of the braking system. This effectively avoids yawing during braking of the vehicle, and effectively improves braking safety of the vehicle. Because it is easy to dispose the first hydraulic apparatus and the second hydraulic apparatus on a front axle of the vehicle, and there is no need to additionally dispose a new set including a pressure control unit and a corresponding electronic control unit, complexity of adding the redundancy backup to the braking system can be effectively reduced, thereby reducing difficulty of vehicle mounting and arrangement. In addition, integration of the first hydraulic apparatus and the second hydraulic apparatus is high, which can effectively improve integration of the braking system.

It may be understood that the first hydraulic apparatus and the second hydraulic apparatus may be braking actuators (for example, boosters) in the EHB, and the first control unit and the second control unit may be ECUs in the EHB. The mechanical actuation unit may be a braking actuator (for example, a motor) in the EMB, and a third control unit may be an ECU in the EMB. In other words, the braking system provided in embodiments of this application may be a hybrid braking system of the EHB and the EMB, the EHB is disposed on the front axle of the vehicle, and the EMB is disposed on a rear axle of the vehicle. In this way, compared with the technical solution in which the EMB is disposed on the front axle of the vehicle, the braking system provided in embodiments of this application can effectively reduce difficulty in vehicle mounting and arrangement, and effectively reduce power consumption of the braking system. In addition, compared with the technical solution in which the EHB is disposed on the rear axle of the vehicle, the braking system provided in embodiments of this application can shorten pressure building time of the braking system from 150 ms to 90 ms, and can shorten a braking distance of 100 kilometers by 1 m to 2 m, so that the braking system provided in embodiments of this application is applicable to a vehicle whose autonomous driving level is L4 (that is, fully autonomous driving is supported) or higher.

It may be understood that the braking system provided in embodiments of this application may be applied to a terminal device having a braking capability. The terminal device may be an intelligent transportation device, including but not limited to a vehicle, a ship, an airplane, an uncrewed aerial vehicle, a train, a truck, a lorry, or the like. In a specific application scenario, the braking system may be applied to the internet of vehicles, for example, vehicle-to-everything (vehicle-to-everything, V2X), long term evolution-vehicle (long term evolution-vehicle, LTE-V), and vehicle-to-vehicle (vehicle-to-vehicle, V2V), and is particularly applicable to an autonomous driving vehicle, an assisted driving vehicle, or the like.

The following describes specific implementations of the braking system provided in embodiments of this application.

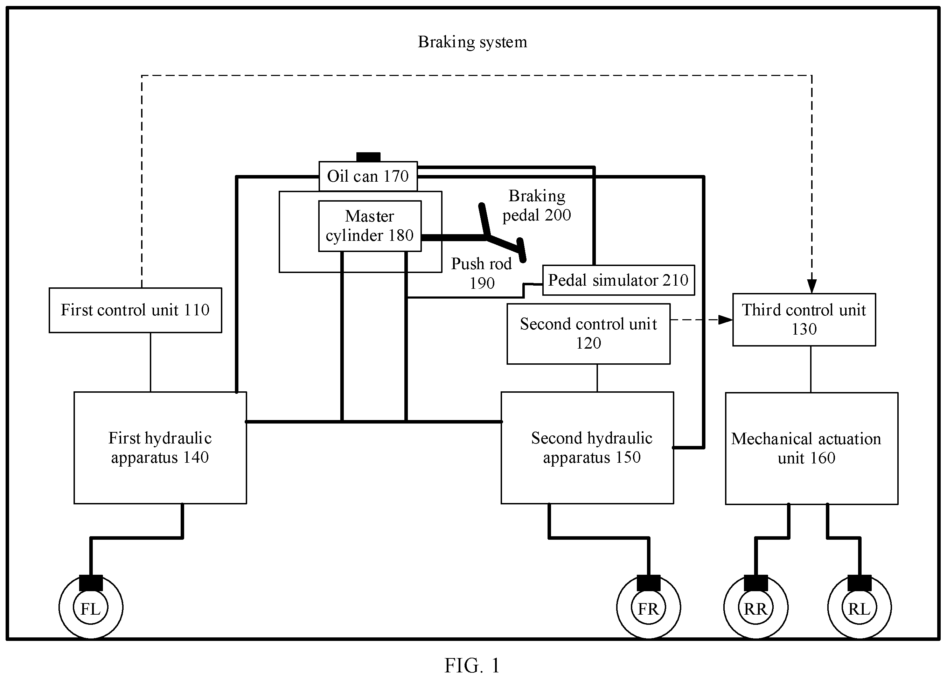

FIG. 1 is an example diagram of a structure of a braking system according to an embodiment of this application. As shown in FIG. 1, in this example, the braking system includes a first control unit 110, a second control unit 120, a third control unit 130, a first hydraulic braking apparatus 140, a second hydraulic braking apparatus 150, and a mechanical actuation unit 160. The first hydraulic apparatus 140 and the second hydraulic apparatus 150 are connected through a hydraulic pipe, the first hydraulic apparatus 140 is configured to brake a first front wheel of a vehicle, the second hydraulic apparatus 150 is configured to brake a second front wheel of the vehicle, and the mechanical actuation unit 160 is configured to brake a rear wheel of the vehicle. The first control unit 110 is connected to the first hydraulic apparatus 140, so that the first control unit 110 can implement braking of the first front wheel of the vehicle by controlling the first hydraulic apparatus 140. The second control unit 120 is connected to the second hydraulic apparatus 150, so that the second control unit 120 can implement braking of the second front wheel of the vehicle by controlling the second hydraulic apparatus 150. The third control unit 130 is connected to the mechanical actuation unit 160, so that the third control unit 130 may implement braking of the second front wheel of the vehicle by controlling the mechanical actuation unit 160.

In the braking system 600 provided in this embodiment of this application, the first hydraulic apparatus 140 implements braking of the first front wheel of the vehicle, the second hydraulic apparatus 150 implements braking of the second front wheel of the vehicle, and the mechanical actuation unit 160 implements braking of the rear wheel of the vehicle, so that braking efficiency of the vehicle can be effectively improved. In addition, the first hydraulic apparatus 140 and the second hydraulic apparatus 150 are connected through the hydraulic pipe. Therefore, when the first control unit 110 fails, the second control unit 120 can alternatively control the first hydraulic apparatus 140 to implement braking of the first front wheel and control the second hydraulic apparatus 150 to implement braking of the second front wheel. In other words, redundant braking of the braking system is implemented, so that yawing during braking of the vehicle can be effectively avoided, and safety and reliability of the braking system are effectively improved. In addition, in this embodiment of this application, the first hydraulic apparatus 140 and the second hydraulic apparatus 150 are integrated, and integration is high. The first hydraulic apparatus 140 and the second hydraulic apparatus 150 are disposed in the braking system, so that integration of the braking system can be effectively improved. In addition, it is easy to dispose the first hydraulic apparatus 140 and the second hydraulic apparatus 150 on a front axle of the vehicle, and there is no need to additionally dispose a new set including a pressure control unit and a corresponding electronic control unit, so that complexity of adding redundancy backup to the braking system can be effectively reduced, thereby reducing difficulty of vehicle mounting and arrangement.

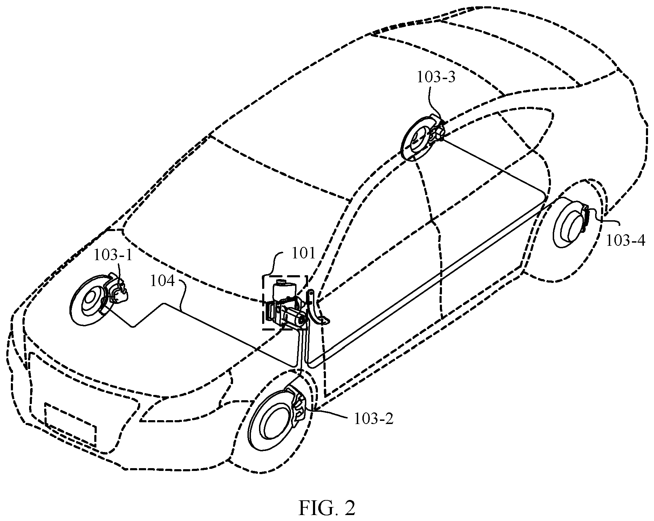

FIG. 2 is a diagram of mounting positions of components of the braking system in the vehicle according to some embodiments of this application. As shown in FIG. 2, in the braking system provided in this embodiment of this application, the first control unit 110 and the second control unit 120 may be disposed in a front axle braking module 101, the first hydraulic apparatus 140 may be disposed in a front axle braking module 103-1, the second hydraulic apparatus 150 may be disposed in a front axle braking module 103-2, and the first hydraulic apparatus 140 and the second hydraulic apparatus 150 may be connected through a hydraulic pipe 104. The third control unit 130 may be disposed in a rear axle braking module 103-3, and the mechanical actuation unit in the braking system may be disposed in a rear axle braking module 103-4.

The vehicle is used as an example. Still refer to FIG. 1. It is assumed that the vehicle has four braked wheels. The first front wheel is a left front wheel (left front wheel, LFW) (namely, a wheel corresponding to FL shown in FIG. 1), the second front wheel is a right front wheel (right front wheel, RFW) (namely, a wheel corresponding to FR shown in FIG. 1), and the rear wheel is a left rear wheel (left rear wheel, LRW) (namely, a wheel corresponding to RL shown in FIG. 1) and a right rear wheel (right rear wheel, RRW) (namely, a wheel corresponding to RR shown in FIG. 1). Correspondingly, the first hydraulic apparatus 140 is connected to the wheel corresponding to FL through a hydraulic pipe, so that the first control unit 110 can implement braking of the FL wheel of the vehicle by controlling the first hydraulic apparatus 140. The second hydraulic apparatus 150 is connected to the wheel corresponding to FR through a hydraulic pipe, so that the second control unit 120 can implement braking of the FR wheel of the vehicle by controlling the second hydraulic apparatus 150. The mechanical actuation unit 160 is connected to the wheel corresponding to RL and the wheel corresponding to RR, so that the third control unit 130 can implement braking of the RL wheel and the RR wheel of the vehicle by controlling the mechanical actuation unit 160.

As shown in FIG. 1, the braking system further includes an oil can 170, a master cylinder 180, a push rod 190, a braking pedal 200, and a pedal simulator 210. The braking pedal 200 is connected to the master cylinder 180 through the push rod 190, one end of the master cylinder 180 is connected to the oil can 170 through a hydraulic pipe, the other end of the master cylinder 180 is separately connected to the first hydraulic apparatus 140 and the second hydraulic apparatus 150 through hydraulic pipes, one end of the pedal simulator 210 is connected to the oil can 170 through a hydraulic pipe, and the other end of the pedal simulator 210 is connected to the master cylinder 180 through a hydraulic pipe. The first hydraulic apparatus 140 or the second hydraulic apparatus 150 is further configured to control oil in the master cylinder 180 to flow into the pedal simulator 210. In this way, the first hydraulic apparatus 140 or the second hydraulic apparatus 150 may control the oil in the master cylinder 180 to smoothly flow into the pedal simulator with pedaling of a driver, to maintain a feeling of the driver of stepping on the pedal for braking unchanged, and ensure comfort of the driver and consistency of the pedal feeling.

In this embodiment of this application, the master cylinder 180 is also referred to as a master hydraulic braking valve. The master cylinder 180 may be disposed independently of the first hydraulic apparatus 140 and the second hydraulic apparatus 150, to flexibly control the oil in the master cylinder, and facilitate maintenance and replacement of a component in the braking system. Alternatively, the master cylinder 180 may be integrated into the first hydraulic apparatus 140 or the second hydraulic apparatus 150, to further improve system integration. During implementation, the master cylinder 180, the push rod 190, and the braking pedal 200 may be configured to implement the pedal feeling of the driver. For example, generally, the master cylinder 180 is a piston cylinder, and the piston cylinder stores oil flowing from the oil can 170. When the driver steps on the braking pedal 200, a stepping force drives the push rod 190 to push a piston rod in the master cylinder 180 to move, so that the oil in the piston cylinder is pressed into the hydraulic pipe between the master cylinder 180 and the first hydraulic apparatus 140, and then flows into the first hydraulic apparatus 140. In this way, the stepping force of the driver on the braking pedal 200 is converted into power of the oil, to maintain the feeling of the driver of stepping on the pedal for braking. On the contrary, when the driver retracts the stepping force on the braking pedal 200, the braking pedal 200 drives the push rod 190 to move, to reset the piston rod in the master cylinder 180. In this way, the oil that is previously pressed into the hydraulic pipe between the master cylinder 180 and the first hydraulic apparatus 140 and the oil that flows into the first hydraulic apparatus 140 return to the piston cylinder, to maintain a feeling that the driver cancels braking by stopping stepping on the pedal. Similarly, when the driver steps on the braking pedal 200, the stepping force drives the push rod 190 to push the piston rod in the master cylinder 180 to move, so that the oil in the piston cylinder is pressed into the hydraulic pipe between the master cylinder 180 and the second hydraulic apparatus 150, and then flows into the second hydraulic apparatus 150. In this way, the stepping force of the driver on the braking pedal 200 is converted into power of the oil, to maintain the feeling of the driver of stepping on the pedal for braking. On the contrary, when the driver retracts the stepping force on the braking pedal 200, the braking pedal 200 drives the push rod 190 to move, to reset the piston rod in the master cylinder 180. In this way, the oil that is previously pressed into the hydraulic pipe between the master cylinder 180 and the second hydraulic apparatus 150 and the oil that flows into the second hydraulic apparatus 150 return to the piston cylinder, to maintain the feeling that the driver cancels braking by stopping stepping on the pedal.

In embodiments of this application, the pedal simulator 210 may be disposed independently of the first hydraulic apparatus 140 and the second hydraulic apparatus 150, so that the first hydraulic apparatus 140 and the second hydraulic apparatus 150 control the oil flowing into the pedal simulator 210. Alternatively, the pedal simulator 210 may be integrated into the first hydraulic apparatus 140 or the second hydraulic apparatus 150, to further improve system integration.

In embodiments of this application, the oil can 170 is an apparatus configured to store oil. During braking, after being extracted from the oil can 170, the oil is applied to the FL wheel through a hydraulic pipe between the oil can 170 and the first hydraulic apparatus 140 and the hydraulic pipe between the first hydraulic apparatus 140 and the FL wheel, to implement a braking operation on the FL wheel by applying pressure to the FL wheel. When the braking is canceled, the oil previously applied to the FL wheel returns to the oil can 170 through the hydraulic pipe between the FL wheel and the first hydraulic apparatus 140 and the hydraulic pipe between the first hydraulic apparatus 140 and the oil can 170, to implement recycling of the oil. Similarly, during braking, after being extracted from the oil can 170, the oil is applied to the FR wheel through a hydraulic pipe between the oil can 170 and the second hydraulic apparatus 150 and the hydraulic pipe between the second hydraulic apparatus 150 and the FR wheel, to implement a braking operation on the FR wheel by applying pressure to the FR wheel. When the braking is canceled, the oil previously applied to the FR wheel returns to the oil can 170 through the hydraulic pipe between the FR wheel and the second hydraulic apparatus 150 and the hydraulic pipe between the second hydraulic apparatus 150 and the oil can 170, to implement recycling of the oil.

In embodiments of this application, the first control unit 110, the second control unit 120, and the third control unit 130 may also be referred to as electronic control units (Electronic Control Units, ECUs). During implementation, any one of the first control unit 110, the second control unit 120, and the third control unit 130 may be an independently developed ECU, to facilitate control and management of the braking system. Alternatively, any one of the first control unit 110, the second control unit 120, and the third control unit 130 may reuse a controller (for example, a vehicle identification unit (Vehicle Identification Unit, VIU) or a vehicle domain controller (Vehicle Domain Controller, VDC)) of the vehicle, to further reduce a quantity of components of the braking system, reduce complexity of the braking system, and reduce development costs. The first control unit 110, the second control unit 120, and the third control unit 130 may communicate with each other by using a CANFD technology or a CAN technology. In other words, the first control unit 110, the second control unit 120, and the third control unit 130 may all be connected through a CAN bus. When braking needs to be controlled, for example, the first control unit 110 may send a control instruction of a braking intention to the CAN bus. In this case, both the second control unit 120 and the third control unit 130 can obtain the control instruction from the CAN bus, and then the second control unit 120 and the third control unit 130 execute the control instruction.

In embodiments of this application, there are many solutions that can implement switching to the second control unit 120 when the first control unit 110 fails. Examples are as follows.

In a possible solution, the first control unit 110 and the second control unit 120 may communicate with each other by using a local internet (local internet, LIN) technology, a Flexray network technology, a controller area network (controller area network, CAN) technology, or the like. The first control unit 110 may send a heartbeat message to the second control unit 120 based on a preset period, a timer may be disposed in the second control unit 120, and duration of the timer is duration of one preset period. During implementation, each time the second control unit 120 receives the heartbeat message sent by the first control unit 110, the second control unit 120 may start or restart the timer. When the timer expires, if the second control unit 120 does not receive another heartbeat message sent by a redundant ECU 121, it means that the first control unit 110 is abnormal. In this case, the second control unit 120 may determine that braking of the first control unit 110 fails, and then the second control unit 120 may switch to an effective state, that is, may control, based on a stepping instruction of the driver or an instruction of the autonomous driving system or the assisted driving system, the first hydraulic apparatus 140 to brake. On the contrary, before the timer expires, if the second control unit 120 receives another heartbeat message sent by the first control unit 110, it means that the first control unit 110 is normal, and the first control unit 110 can still implement the braking function. Therefore, the second control unit 120 may not switch a state, that is, is still in an ineffective state.

In another possible solution, the first control unit 110 and the second control unit 120 may communicate with each other by using the LIN technology, the Flexray network technology, the CAN technology, or the like. In addition, a detection circuit may be disposed in the first control unit 110, the detection circuit includes a detection resistor, and the detection resistor is disposed on a circuit that connects the first control unit 110 to a connected braking actuator. When the first control unit 110 drives the braking actuator to work, the first control unit 110 may further obtain a value of a current flowing through the detection resistor (for example, may obtain the value of the current by using a current detector). If the value of the current does not match a value of a current of a component in a working state, it means that the braking of the first control unit 110 is abnormal. In this case, the first control unit 110 may send an effective instruction to the second control unit 120, so that the second control unit 120 switches to the effective state based on the effective instruction. On the contrary, if the value of the current matches the value of the current of the component in the working state, it means that the braking of the first control unit 110 is normal, the first control unit 110 may continue to brake, and the second control unit 120 may continue to be ineffective.

For example, in this solution, that the value of the current of the detection resistor matches the value of the current of the component in the working state may mean that a difference between the value of the current of the detection resistor and the value of the current of the component in the working state is not greater than a preset difference threshold. That the value of the current of the detection resistor does not match the value of the current of the component in the working state may mean that a difference between the value of the current of the detection resistor and the value of the current of the component in the working state is greater than the preset difference threshold. The value of the current of the component in the working state and the preset difference threshold may be obtained through experimental verification, or may be obtained by a person skilled in the art based on experience. This is not specifically limited. In a possible obtaining manner based on experience, if the component is a normally open solenoid valve, the component is disconnected when being powered on, and is connected when being not powered on. In other words, the value of the current of the component in the working state should be a value that is of the current and that corresponds to a high level. Based on this, if the first control unit 110 powers on the component, a value of a current on a line between the first control unit 110 and the component should be a value that is of the current and that corresponds to a high level. However, if the value of the current flowing through the detection resistor disposed on the line is a value that is of the current and that corresponds to a low level, it indicates that an error occurs in a control process of the component. Therefore, the first control unit 110 may send the effective instruction to the second control unit 120. Similarly, if the component is a normally closed solenoid valve, when the component is powered on, the value of the current on the line between the first control unit 110 and the component should be a value that is of the current and that corresponds to the low level. However, if the value of the current flowing through the detection resistor disposed on the line is a value that is of the current and that corresponds to the high level, it indicates that an error occurs in a control process of the component. Therefore, the first control unit 110 may also send the effective instruction to the second control unit 120.

In a possible solution, a central controller may be further disposed outside the braking system, the central controller may communicate with the first control unit 110, the second control unit 120, the third control unit 130, and various sensors (for example, a pedal travel sensor and a pressure sensor) in the braking system by using the LIN technology, the Flexray mesh technology, the CAN technology, or the like. During implementation, when determining, based on the stepping instruction of the driver or the instruction of the autonomous driving system or the assisted driving system, to brake the vehicle, the central controller may send a braking instruction to the first control unit 110, the second control unit 120, and the third control unit 130, to brake the vehicle by using the first control unit 110, the second control unit 120, and the third control unit 130. In addition, in braking processes of the first control unit 110, the second control unit 120, and the third control unit 130, the central controller may further collect sensor data reported by each sensor in the vehicle, and detect a traveling status of the vehicle based on the sensor data. Once it is found that the traveling status of the vehicle does not match the braking instruction sent by the central controller to the first control unit 110, it indicates that the first control unit 110 fails. In this case, the central controller may re-send the braking instruction to the second control unit 120, to brake the front wheel by using the second control unit 120. Then, the central controller may always brake the front wheel by using the second control unit 120 until receiving a notification message indicating that the first control unit 110 performs self-check and restoration, or after detecting that the braking system is restarted, the central controller switches back to the default first control unit 110 to brake the front wheel.

The central controller may be an integrated circuit chip and has a signal processing capability. For example, the central controller may be a general-purpose processor, a field programmable gate array (field programmable gate array, FPGA), an application specific integrated chip (application specific integrated circuit, ASIC), a system-on-a-chip (system-on-a-chip, SoC), a network processor (network processor, NP), a digital signal processor (digital signal processor, DSP), a micro controller unit (micro controller unit, MCU), or a programmable logic device (programmable logic device, PLD), another programmable logic device, a discrete gate or transistor logic device, a discrete hardware component, or another integrated chip. The central controller may include an element or a circuit having a processing capability, for example, include a central processing unit (central processing unit, CPU), a neural network processing unit (neural network processing unit, NPU), or a graphics processing unit (graphics processing unit, GPU). For another example, the central controller may include an application processor (application processor, AP), a modem processor, an image signal processor (image signal processor, ISP), a video codec, a digital signal processor (digital signal processor, DSP), a baseband processor, and/or the like. This is not specifically limited.

In the foregoing three possible solutions, in the first two solutions, braking switching may be directly completed through interaction between the first control unit 110 and the second control unit 120, and transferring of the central controller is not required. This helps improve efficiency of redundant braking. In the third solution, the central controller can uniformly manage an effective state or an ineffective state of each control unit, to help improve standardization of controlling management of a first state.

In some possible embodiments, two or three of the first control unit 110, the second control unit 120, and the third control unit 130 may be integrated into one controller. For example, the first control unit 110 and the second control unit 120 are integrated into a same controller. For another example, the first control unit 110 and the third control unit 130 are integrated into one controller. For another example, both the second control unit 120 and the third control unit 130 are integrated into one controller. For another example, the first control unit 110, the second control unit 120, and the third control unit 130 are all integrated into one controller.

In this embodiment of this application, the first hydraulic apparatus 140 is a braking actuator configured to implement braking of the first front wheel and/or the second front wheel, the second hydraulic apparatus 150 is a braking actuator configured to implement braking of the first front wheel and/or the second front wheel, and the mechanical actuation unit 160 is a braking actuator configured to implement braking of the rear wheel. The first hydraulic apparatus 140 or the second hydraulic apparatus 150 includes a booster and a plurality of hydraulic pipes. The plurality of hydraulic pipes may connect hydraulic components (for example, the FR wheel, the FL wheel, the master cylinder 180, and the oil can 170) in the braking system to another hydraulic apparatus.

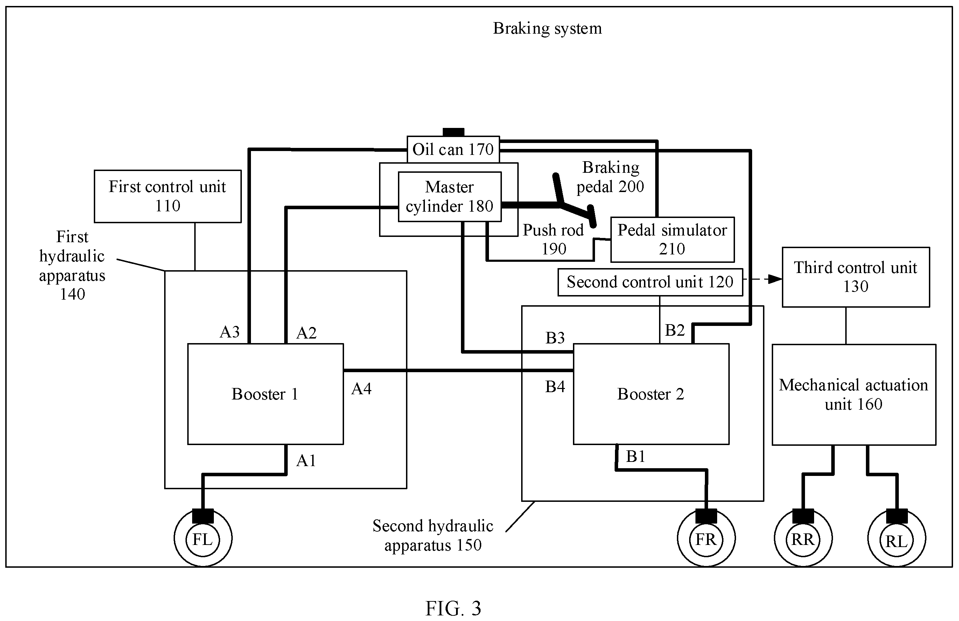

For example, as shown in FIG. 3, the first hydraulic apparatus 140 includes a booster 1, and the booster 1 includes an interface A1, an interface A2, an interface A3, and an interface A4. The booster 1 is connected to the FL wheel through the interface A1, the booster 1 is connected to the master cylinder 180 through the interface A2, the booster 1 is connected to the oil can 170 through the interface A3, and the booster 1 is connected to the second hydraulic apparatus 150 through the interface A4. Similarly, the second hydraulic apparatus 150 includes a booster 2, and the booster 2 includes an interface B1, an interface B2, an interface B3, and an interface B4. The booster 2 is connected to the FR wheel through the interface B1, the booster 2 is connected to the master cylinder 180 through the interface B2, the booster 2 is connected to the oil can 170 through the interface B3, and the booster 2 is connected to the first hydraulic apparatus 140 through the interface B4. It may be understood that the interfaces and the components may be connected through hydraulic pipes. These hydraulic pipes may be disposed at the first hydraulic apparatus 140 or the second hydraulic apparatus 150, or may be configured for different interface features. This is not specifically limited in embodiments of this application.

The following describes possible structures of the first hydraulic apparatus 140 and the second hydraulic apparatus 150 with reference to specific accompanying drawings.

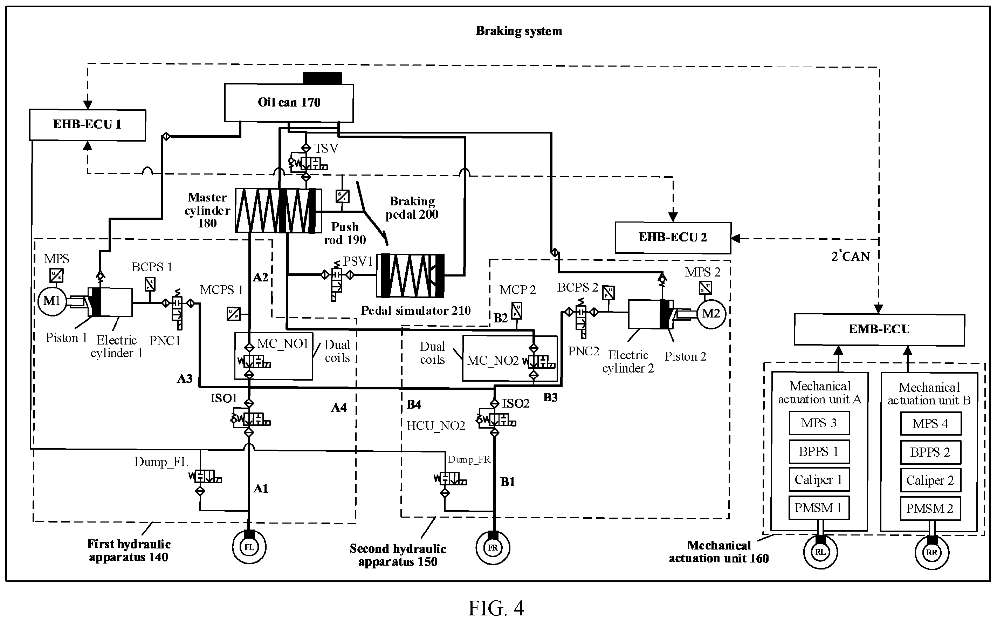

It should be noted that, in FIG. 4 to FIG. 7, an EHB-ECU 1 is used as an example of the first control unit 110, an EHB-ECU 2 is used as an example of the second control unit 120, and an EMB-ECU is used as an example of the third control unit 130.

Implementation 1: As shown in FIG. 4, the booster 1 in the first hydraulic apparatus 140 includes a motor M1, an electric cylinder 1, a piston 1, a control valve MC-NO1, an electric cylinder normally closed valve PNC1, and a booster valve ISO1. The booster valve ISO1 is connected to the control valve MC-NO1, one end of the electric cylinder normally closed valve PNC1 is separately connected to the booster valve ISO1 and the control valve MC-NO1, and the other end of the electric cylinder normally closed valve PNC1 is connected to the electric cylinder. The motor M1 is connected to the electric cylinder 1, and the piston 1 is disposed in the electric cylinder 1, so that the motor M1 can control the piston 1 to move in the electric cylinder 1. Correspondingly, the booster valve ISO1 is connected to a wheel cylinder through the interface A1, the control valve MC-NO1 is connected to the master cylinder through the interface A2, the electric cylinder 1 is connected to the oil can 170 through the interface A3, and the control valve MC-NO1 is connected to the second hydraulic apparatus 150 through the interface A4. The booster 2 in the second hydraulic apparatus 150 includes a motor M2, an electric cylinder 2, a piston 2, a control valve MC-NO2, an electric cylinder normally closed valve PNC2, and a booster valve ISO2. The booster valve ISO2 is connected to the control valve MC-NO2, one end of the electric cylinder normally closed valve PNC2 is separately connected to the booster valve ISO2 and the control valve MC-NO2, and the other end of the electric cylinder normally closed valve PNC2 is connected to the electric cylinder. The motor M2 is connected to the electric cylinder 2, and the piston 2 is disposed in the electric cylinder 2, so that the motor M2 can control the piston 2 to move in the electric cylinder 2. Correspondingly, the booster valve ISO2 is connected to the wheel cylinder through the interface B1, the control valve MC-NO2 is connected to the master cylinder through the interface B2, the electric cylinder 2 is connected to the oil can 170 through the interface B3, and the control valve MC-NO2 is connected to the first hydraulic apparatus 140 through the interface B4.

It may be understood that the control valve MC-NO1 and the control valve MC-NO2 are normally open valves. Correspondingly, a braking process of the FL wheel in the implementation 1 includes: The EHB-ECU 1 controls the control valve MC-NO1 to close, controls the electric cylinder normally closed valve PNC1 to open, and controls the motor M1 to rotate, so that the piston 1 moves and presses oil in the electric cylinder 1 to flow into the FL wheel through the electric cylinder normally closed valve PNC1 and the booster valve ISO1, to implement braking of the FL wheel. A braking process of the FR wheel in the implementation 1 includes: The EHB-ECU 2 controls the control valve MC-NO2 to close, controls the electric cylinder normally closed valve PNC2 to open, and controls the motor M2 to rotate, so that the piston 2 moves and presses oil in the electric cylinder 2 to flow into the FR wheel through the electric cylinder normally closed valve PNC2 and the booster valve ISO2, to implement braking of the FR wheel.

Further, in a possible implementation, the control valve MC-NO1 includes dual coils, one coil in the dual coils is connected to the EHB-ECU 1, and the other coil in the dual coils is connected to the EHB-ECU 2. Therefore, when the EHB-ECU 1 fails, the EHB-ECU 2 may control the control valve MC-NO1 to close. In this way, when the EHB-ECU 1 fails, the oil in the electric cylinder 1 can still flow to the FL wheel, to implement redundant braking of the FL wheel. Similarly, the control valve MC-NO2 includes dual coils, one coil in the dual coils is connected to the EHB-ECU 1, and the other coil in the dual coils is connected to the EHB-ECU 2. In this way, when the EHB-ECU 2 fails, the EHB-ECU 1 may control the control valve MC-NO2 to close, and the oil in the electric cylinder 2 may still flow to the FR wheel, to implement redundant braking of the FR wheel. In this way, reliability of the braking system is effectively improved.

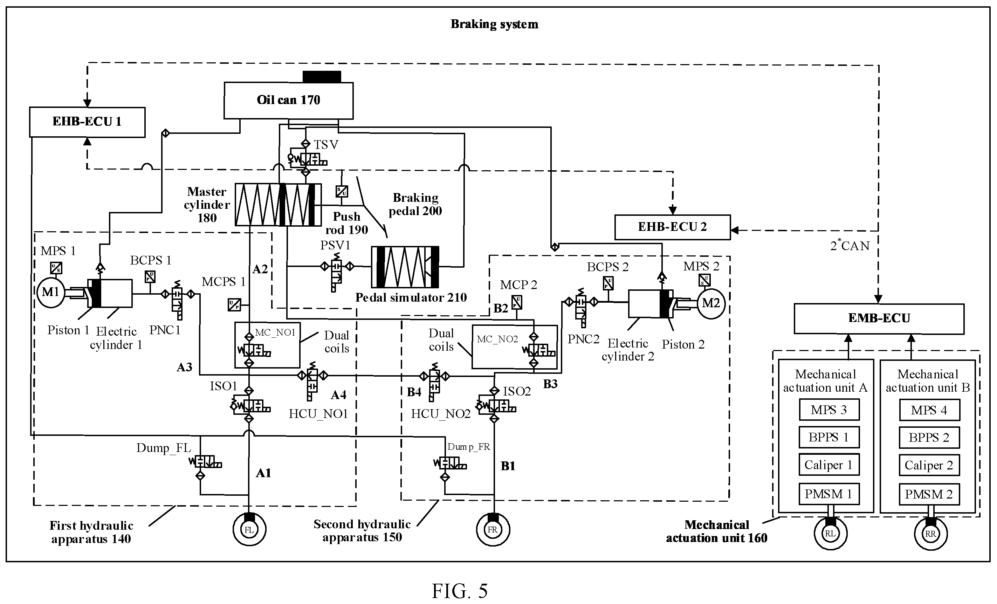

Implementation 2: As shown in FIG. 5, the booster 1 in the first hydraulic apparatus 140 includes a motor M1, an electric cylinder 1, a piston 1, a first control valve HCU-NO1, a third control valve MC-NO1, an electric cylinder normally closed valve PNC1, and a booster valve ISO1. The booster valve ISO1 is separately connected to the first control valve HCU-NO1 and the third control valve MC-NO1, one end of the electric cylinder normally closed valve PNC1 is separately connected to the booster valve ISO, the first control valve HCU-NO1, and the third control valve MC-NO1, and the other end of the electric cylinder normally closed valve PNC1 is connected to the electric cylinder 1. The motor 1 is connected to the electric cylinder 1, the piston 1 is disposed in the electric cylinder 1, and the motor 1 is configured to control the piston 1 to move in the electric cylinder 1. Correspondingly, the booster valve ISO1 is connected to the wheel cylinder through the interface A1, the third control valve MC-NO1 is connected to the master cylinder through the interface A2, the electric cylinder 1 is connected to the oil can 170 through the interface A3, and the first control valve HCU-NO1 is connected to the second hydraulic apparatus 150 through the interface A4. Similarly, the booster 2 in the second hydraulic apparatus 250 includes a motor 2, an electric cylinder 2, a piston 2, a second control valve HCU-NO2, a fourth control valve MC-NO2, an electric cylinder normally closed valve PNC2, and a booster valve ISO2. The booster valve ISO2 is separately connected to the second control valve HCU-NO2 and the fourth control valve MC-NO2, one end of the electric cylinder normally closed valve PNC2 is separately connected to the booster valve ISO, the second control valve HCU-NO2, and the fourth control valve MC-NO2, and the other end of the electric cylinder normally closed valve PNC2 is connected to the electric cylinder 2. The motor 2 is connected to the electric cylinder 2, the piston 2 is disposed in the electric cylinder 2, and the motor 2 is configured to control the piston 2 to move in the electric cylinder 2. Correspondingly, the booster valve ISO2 is connected to the wheel cylinder through the interface B2, the fourth control valve MC-NO2 is connected to the master cylinder through the interface B2, the electric cylinder 2 is connected to the oil can 170 through the interface B3, and the second control valve HCU-NO2 is connected to the second hydraulic apparatus 150 through the interface B4.

It may be understood that the first control valve HCU-NO1 and the second control valve HCU-NO2 are normally open valves. Correspondingly, a braking process of the FL wheel in the implementation 2 includes: The EHB-ECU 1 controls the first control valve HCU-NO1 to close, controls the electric cylinder normally closed valve PNC1 to open, and controls the motor M1 to rotate, so that the piston 1 moves and presses oil in the electric cylinder 1 to flow into the FL wheel through the electric cylinder normally closed valve PNC1 and the booster valve ISO1, to implement braking of the FL wheel. A braking process of the FR wheel in the implementation 2 includes: The EHB-ECU 2 controls the second control valve HCU-NO2 to close, controls the electric cylinder normally closed valve PNC2 to open, and controls the motor M2 to rotate, so that the piston 2 moves and presses oil in the electric cylinder 2 to flow into the FR wheel through the electric cylinder normally closed valve PNC2 and the booster valve ISO2, to implement braking of the FR wheel.

Further, in a possible implementation, the control valve MC-NO1 includes dual coils, one coil in the dual coils is connected to the EHB-ECU 1, and the other coil in the dual coils is connected to the EHB-ECU 2. Therefore, when the EHB-ECU 1 fails, the EHB-ECU 2 may control the control valve MC-NO1 to close. In this way, when the EHB-ECU 1 fails, the oil in the electric cylinder 1 can still flow to the FL wheel, to implement redundant braking of the FL wheel. Similarly, the control valve MC-NO2 includes dual coils, one coil in the dual coils is connected to the EHB-ECU 1, and the other coil in the dual coils is connected to the EHB-ECU 2. In this way, when the EHB-ECU 2 fails, the EHB-ECU 1 may control the control valve MC-NO2 to close, and the oil in the electric cylinder 2 may still flow to the FR wheel, to implement redundant braking of the FR wheel. In this way, reliability of the braking system is effectively improved.

It can be learned from the implementation 2 that the first hydraulic apparatus 140 includes the first control valve HCU-NO1, the second hydraulic apparatus 150 includes the second control valve HCU-NO2, and the first control valve HCU-NO1 is connected to the second control valve HCU-NO2 through a hydraulic pipe, to implement a connection between the first hydraulic apparatus 140 and the second hydraulic apparatus 150. In this way, control of the first hydraulic apparatus 140 and the second hydraulic apparatus 150 is simple. In this embodiment of this application, there are other possible implementations of the connection between the first hydraulic apparatus 140 and the second hydraulic apparatus 150, including but not limited to the following manners.

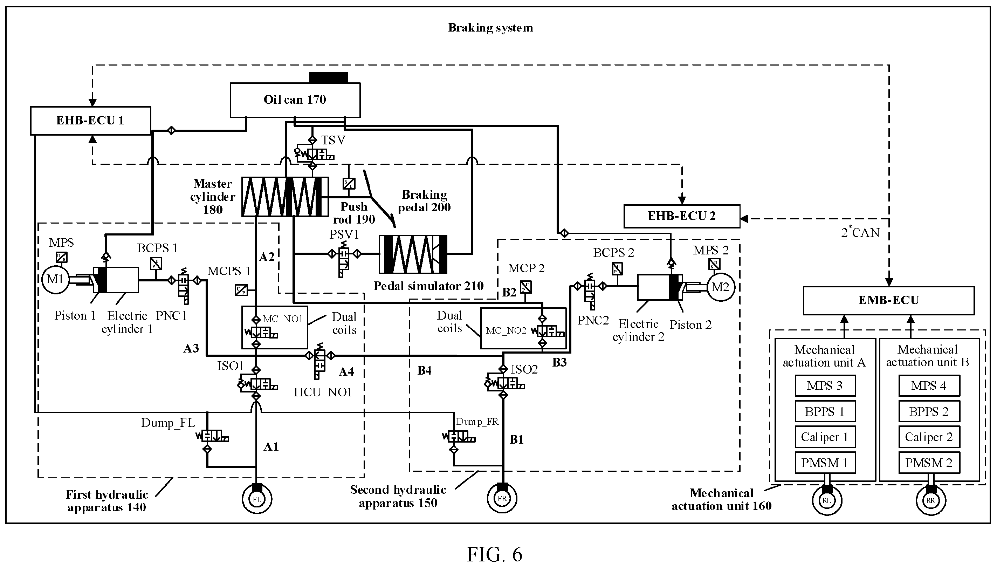

Manner 1: As shown in FIG. 6, the first hydraulic apparatus 140 includes the first control valve HCU-NO1, and the first control valve HCU-NO1 is connected to the second hydraulic apparatus 150 through a hydraulic pipe, to implement the connection between the first hydraulic apparatus 140 and the second hydraulic apparatus 150.

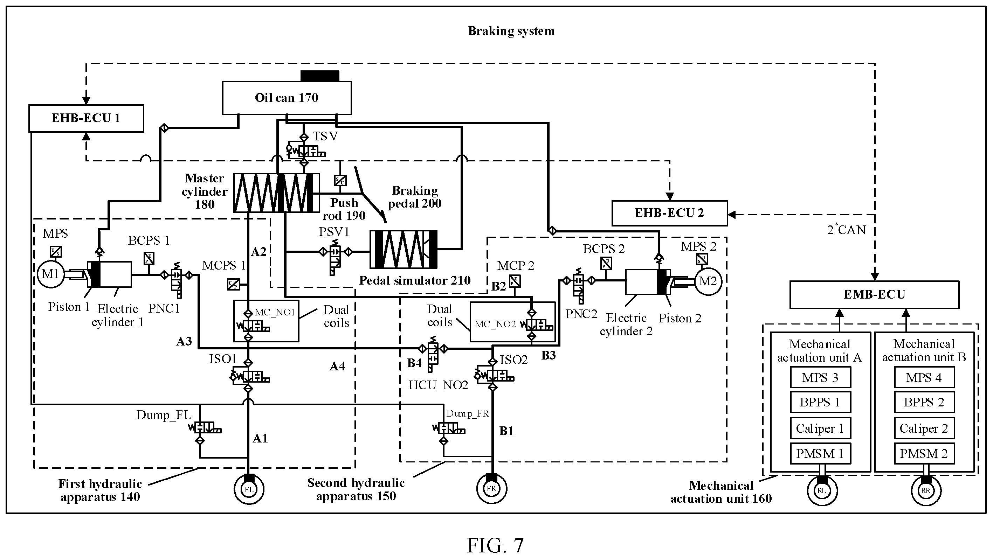

Manner 2: As shown in FIG. 7, the second hydraulic apparatus 150 includes the second control valve HCU-NO2, and the first hydraulic apparatus 140 is connected to the second control valve HCU-NO2 through a hydraulic pipe, to implement the connection between the first hydraulic apparatus 140 and the second hydraulic apparatus 150.

In the manner 1 and the manner 2, the first hydraulic apparatus 140 and the second hydraulic apparatus 150 may share one control valve, so that a quantity of components in the braking system can be further reduced, and complexity of the braking system can be reduced.

As shown in FIG. 4 to FIG. 7, the first hydraulic apparatus 140 further includes a braking circuit pressure sensor BCPS 1, a motor position sensor (motor position sensor, MPS) 1, and a pressure reducing valve Dump_FL. The braking circuit pressure sensor BCPS 1 is connected to the electric cylinder 1, the motor position sensor MPS 1 is connected to the motor 1, and the pressure reducing valve Dump_FL is connected to the wheel cylinder. The second hydraulic apparatus 150 further includes a braking circuit pressure sensor BCPS 2, a motor position sensor MPS 2, and a pressure reducing valve Dump_FL. The braking circuit pressure sensor BCPS 2 is connected to the electric cylinder 2, the motor position sensor MPS 2 is connected to the motor 2, and the pressure reducing valve Dump_FR is connected to the wheel cylinder. In this way, the first hydraulic apparatus 140 and the second hydraulic apparatus 150 can implement a pressure building operation in the braking process.

It should be noted that, in embodiments of this application, a pressure building manner of the first hydraulic apparatus 140 controlled by the EHB-ECU 1 may be the same as or different from a pressure building manner of the second hydraulic apparatus 150 controlled by the EHB-ECU 2. In this way, the braking system provided in embodiments of this application can meet braking requirements in different scenarios. The pressure building manner includes unidirectional pressure building or bidirectional pressure building.

Example 1: Still refer to FIG. 4 to FIG. 7. Both the electric cylinder 1 in the first hydraulic apparatus 140 and the electric cylinder 2 in the second hydraulic apparatus 150 are unidirectional moving piston cylinders, therefore, in FIG. 4 to FIG. 7, both the pressure building manner of the first hydraulic apparatus 140 and the pressure building manner of the second hydraulic apparatus 150 are unidirectional pressure building. In the unidirectional pressure building, control loops of the EHB-ECU 1 and the EHB-ECU 2 are simple.

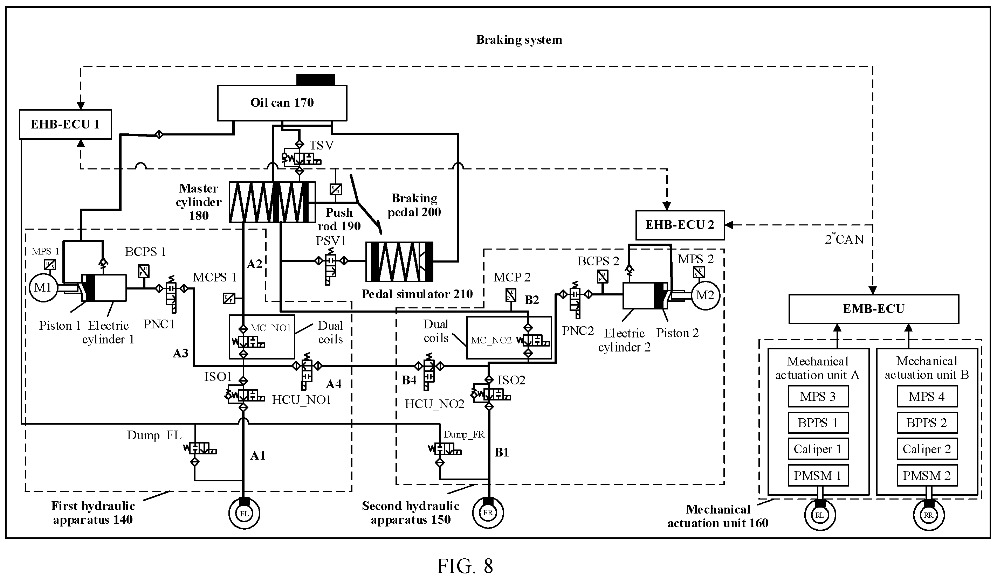

Example 2: Refer to FIG. 8. Both the electric cylinder 1 in the first hydraulic apparatus 140 and the electric cylinder 2 in the second hydraulic apparatus 150 are bidirectional moving piston cylinders. In one aspect, the oil in the oil can 170 flows into a right side of the piston 1 in the electric cylinder 1 through the hydraulic pipe, and in another aspect, the oil in the oil can 170 flows into a left side of the piston 1 in the electric cylinder 1 through the hydraulic pipe. Therefore, the EHB-ECU 1 may control, based on motor position information collected by the motor position sensor MPS 1, the motor M1 to rotate, so that the piston 1 in the electric cylinder 1 moves leftward or rightward, and the oil can be continuously added to the FL wheel. This helps implement bidirectional continuous pressure building of the FL wheel, and effectively improves a pressure building speed of the FL wheel. Similarly, in one aspect, the oil in the oil can 170 flows into a right side of the piston 2 in the electric cylinder 2 through the hydraulic pipe, and in another aspect, the oil in the oil can 170 flows into a left side of the piston 2 in the electric cylinder 2 through the hydraulic pipe. Therefore, the EHB-ECU 2 may control, based on motor position information collected by the motor position sensor MPS 2, the motor M2 to rotate, so that the piston 2 in the electric cylinder 2 moves leftward or rightward, and the oil can be continuously added to the FR wheel. This helps implement bidirectional continuous pressure building of the FR wheel, and effectively improves a pressure building speed of the FR wheel. In this way, the bidirectional pressure building can effectively improve a pressure building rate, effectively improve a braking rate, and effectively improve the reliability of the braking system.

In embodiments of this application, to further improve reliability of the braking system, both the first control unit 110 and the second control unit 120 can recognize a braking intention of a driver, that is, can implement backup of the braking intention. In a possible implementation, the first control unit 110 may further identify the braking intention of the driver, and send the braking intention to the third control unit 130. Correspondingly, the third control unit 130 receives the braking intention, and controls the mechanical actuation unit 160 in response to the braking intention. Alternatively, when the first control unit 110 fails, the second control unit 120 may recognize the braking intention of the driver, and send the braking intention to the third control unit 130. Correspondingly, the third control unit 130 receives the braking intention from the second control unit 120, and controls the mechanical actuation unit 160 in response to the braking intention. In this way, when the first control unit 110 fails, the second control unit 120 may obtain the braking intention. This effectively reduces a case in which the braking intention is not identified, and further improves safety of the braking system.

The first control unit 110 identifies the braking intention of the driver in a plurality of implementations, including but not limited to the following manners.

Manner 1: The first control unit 110 obtains a first sensor signal of a braking pedal 200 in the braking system, and identifies the braking intention based on the first sensor signal. In this way, the first control unit 110 may identify the braking intention based on the first sensor signal collected by the first control unit 110, so that efficiency of identifying the braking intention is high.

Manner 2: The first control unit 110 obtains a first sensor signal of a braking pedal 200 and receives a second sensor signal, and identifies the braking intention based on the first sensor signal and the second sensor signal. The second sensor signal is collected by the second control unit 120 at the braking pedal 200 in the braking system. In this way, the first control unit 110 identifies the braking intention of the driver based on the first sensor signal collected by the first control unit 110 and the second sensor signal collected by the second control unit 120. Because the first control unit 110 may check the first sensor signal and the second sensor signal, the braking intention identified by the first control unit 110 is accurate.

Optionally, the first sensor signal may be a digital signal (for example, a PTS-SENT signal) of a pressure sensor of the braking pedal 200, and the second sensor signal may be a voltage signal (for example, a PTS-PWM signal) of the pressure sensor of the braking pedal 200.

In a possible implementation, when the first control unit 110 fails, the second control unit 120 may obtain a second sensor signal of the braking pedal 200 in the braking system, and identify the braking intention based on the second sensor signal. In this way, when the first control unit 110 fails, the second control unit 120 may identify the braking intention based on the second sensor signal collected by the second control unit, so that the second control unit 120 can easily identify the braking intention.

Example 1: Still refer to FIG. 4 to FIG. 8. The EHB-ECU 1 is used as an example of the first control unit 110, the EHB-ECU 2 is used as an example of the second control unit 120, and the EMB-ECU is used as an example of the third control unit 130. The EHB-ECU 1 may collect the PTS-SENT signal, and determine the braking intention of the driver based on the PTS-SENT signal. The EHB-ECU 1 controls, based on the braking intention, the first hydraulic apparatus 140 to implement braking of the FL wheel. The EHB-ECU 1 sends the braking intention to the EHB-ECU 2, and the EHB-ECU 2 controls, based on the braking intention, the second hydraulic apparatus 150 to implement braking of the FR wheel. In addition, the EHB-ECU 1 sends the braking intention to the EMB-ECU, and the EMB-ECU controls the mechanical actuation unit 160 to implement braking of the RR wheel and the RL wheel.

Example 2: Still refer to FIG. 4 to FIG. 8. The EHB-ECU 1 is used as an example of the first control unit 110, the EHB-ECU 2 is used as an example of the second control unit 120, and the EMB-ECU is used as an example of the third control unit 130. The EHB-ECU 1 collects the PTS-SENT signal, the EHB-ECU 2 collects the PTS-PWM signal, and the EHB-ECU 2 sends the PTS-PWM signal to the EHB-ECU 1. Further, the EHB-ECU 1 determines the braking intention of the driver based on the PTS-SENT signal and the PTS-PWM signal, and the EHB-ECU 1 controls, based on the braking intention, the first hydraulic apparatus 140 to implement braking of the FL wheel. The EHB-ECU 1 sends the braking intention to the EHB-ECU 2, and the EHB-ECU 2 controls, based on the braking intention, the second hydraulic apparatus 150 to implement braking of the FR wheel. In addition, the EHB-ECU 1 sends the braking intention to the EMB-ECU, and the EMB-ECU controls the mechanical actuation unit 160 to implement braking of the RR wheel and the RL wheel. In this example, the EHB-ECU 1 may check the PTS-SENT signal and the PTS-PWM signal, so that the determined braking intention is accurate.

Example 3: Still refer to FIG. 4 to FIG. 8. The EHB-ECU 1 is used as an example of the first control unit 110, the EHB-ECU 2 is used as an example of the second control unit 120, and the EMB-ECU is used as an example of the third control unit 130. When the EHB-ECU 1 fails, the EHB-ECU 2 collects the PTS-PWM signal. The EHB-ECU 2 determines the braking intention of the driver based on the PTS-PWM signal, and controls, based on the braking intention, the first hydraulic apparatus 140 to implement braking of the FL wheel and the second hydraulic apparatus 150 to implement braking of the FR wheel. In addition, the EHB-ECU 2 sends the braking intention to the EMB-ECU, and the EMB-ECU controls the mechanical actuation unit 160 to implement braking of the RR wheel and the RL wheel. In this example, when the EHB-ECU 1 fails, the EHB-ECU 2 may implement redundant braking of the FL wheel, to effectively avoid yawing during vehicle braking, and effectively improve safety and reliability of vehicle braking.

In embodiments of this application, the mechanical actuation unit 160 and the third control unit 130 are disposed independently, so that impact of heat load of the mechanical actuation unit 160 and road surface vibration on the third control unit 130 can be reduced. Alternatively, the mechanical actuation unit 160 and the third control unit 130 may be integrated, to help further improve integration of the braking system. The third control unit 130 may be one or more ECUs. This is not specifically limited in embodiments of this application.

Example 1: As shown in FIG. 4 to FIG. 8, an EMB-ECU is used as an example of the third control unit 130, and the mechanical actuation unit 160 includes a mechanical actuation unit A and a mechanical actuation unit B, that is, the mechanical actuation unit 160 and the third control unit 130 are disposed independently. The mechanical actuation unit A includes a motor position sensor MPS 3, a brake pad pressure sensor 1 (Brake Pad pressure sensor, BPPS), a brake caliper (Caliper) 1, and a permanent-magnet synchronous motor PMSM 1. Correspondingly, when the EMB-ECU receives the braking intention, the EMB-ECU may control, based on position information that is of the permanent-magnet synchronous motor PMSM and that is obtained by the motor position sensor MPS 3 and pressure information that is of the permanent-magnet synchronous motor PMSM 1 and that is obtained by the brake pad pressure sensor BPPS 1, the brake caliper 1 and the permanent-magnet synchronous motor PMSM 1 to implement braking of the RL wheel. In addition, the mechanical actuation unit B includes a motor position sensor MPS 4, a brake pad pressure sensor BPPS 2, a brake caliper 2, and a permanent-magnet synchronous motor PMSM 2. Correspondingly, when the EMB-ECU receives the braking intention, the EMB-ECU may control, based on position information that is of the permanent-magnet synchronous motor PMSM and that is obtained by the motor position sensor MPS 3 and pressure information that is of the permanent-magnet synchronous motor PMSM 2 and that is obtained by the brake pad pressure sensor BPPS 2, the brake caliper 2 and the permanent-magnet synchronous motor PMSM 2 to implement braking of the RR wheel.

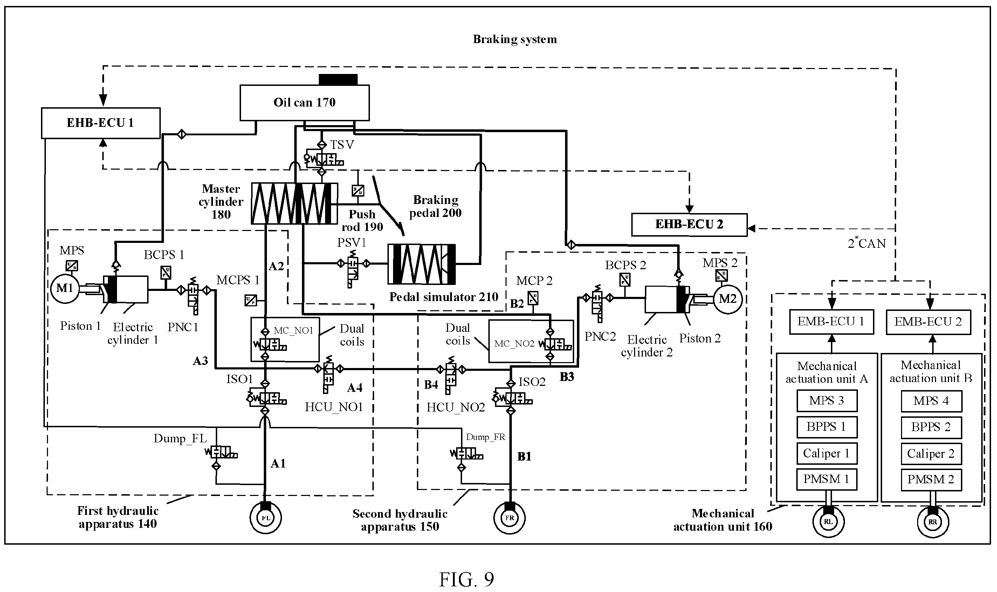

Example 2: As shown in FIG. 9, the EMB-ECU 1 and the EMB-ECU 2 are used as an example of the third control unit 130, and the mechanical actuation unit 160 includes a mechanical actuation unit A, a mechanical actuation unit B, the EMB-ECU 1, and the EMB-ECU 2. In other words, the mechanical actuation unit 160 and the third control unit 130 are integrated. The mechanical actuation unit A includes a motor position sensor MPS 3, a brake pad pressure sensor BPPS 1, a brake caliper 1, and a permanent-magnet synchronous motor PMSM 1. Correspondingly, when the EMB-ECU 1 receives the braking intention, the EMB-ECU 1 may control, based on position information that is of the permanent-magnet synchronous motor PMSM 1 and that is obtained by the motor position sensor MPS 3 and pressure information that is of the permanent-magnet synchronous motor PMSM 1 and that is obtained by the brake pad pressure sensor BPPS 1, the brake caliper 1 and the permanent-magnet synchronous motor PMSM 1 to implement braking of the RL wheel. In addition, the mechanical actuation unit B includes a motor position sensor MPS 4, a brake pad pressure sensor BPPS 2, a brake caliper 2, and a permanent-magnet synchronous motor PMSM 2. Correspondingly, when the EMB-ECU 2 receives the braking intention, the EMB-ECU 2 may control, based on position information that is of the permanent-magnet synchronous motor PMSM 2 and that is obtained by the motor position sensor MPS 3 and pressure information that is of the permanent-magnet synchronous motor PMSM 2 and that is obtained by the brake pad pressure sensor BPPS 2, the brake caliper 2 and the permanent-magnet synchronous motor PMSM 2 to implement braking of the RR wheel.

According to the solutions provided in embodiments of this application, this application further provides a control method. The control method is applied to the braking system described above. The braking system includes a first hydraulic apparatus, a second hydraulic apparatus, a first control unit, and a second control unit. The first hydraulic apparatus and the second hydraulic apparatus are connected through a hydraulic pipe, the first hydraulic apparatus is configured to brake a first front wheel of a vehicle, and the second hydraulic apparatus is configured to brake a second front wheel of the vehicle. The method includes: When the first control unit fails, the second control unit controls the first hydraulic apparatus and the second hydraulic apparatus to complete braking operations on the first front wheel and the second front wheel. In this way, redundant braking of the first front wheel can be implemented, and braking safety of the vehicle can be effectively improved.

Further, the braking system further includes a third control unit and a mechanical actuation unit. The third control unit is configured to control the mechanical actuation unit, and the mechanical actuation unit is configured to brake a rear wheel of the vehicle. The method further includes: The first control unit identifies a braking intention of a driver, and sends the braking intention to the third control unit; or when the first control unit fails, the second control unit identifies a braking intention of a driver, and sends the braking intention to the third control unit.

For a specific implementation procedure and detailed description, refer to related control procedures of the first control unit 110, the second control unit 120, and the third control unit 130 in the foregoing embodiments. Details are not described herein again.

According to the solutions provided in embodiments of this application, this application further provides a computer program product. The computer program product includes computer program code. When the computer program code is run on a computer, the computer is enabled to perform the control method.

According to the solutions provided in embodiments of this application, this application further provides a computer-readable storage medium. The computer-readable medium stores program code. When the program code is run on a computer, the computer is enabled to perform the control method.

According to the solutions provided in embodiments of this application, this application further provides a terminal device, including the braking system shown in the embodiment 1, the integrated apparatus shown in the embodiment 2, or the access control apparatus shown in the embodiment 3.

For example, the terminal device may be a smart home device (including but not limited to a television, a robot vacuum, a smart desk lamp, a sound system, a smart lighting system, an electrical appliance control system, home background music, a home theater system, an intercom system, video surveillance, and the like), a smart transportation device (including but not limited to a vehicle, a ship, an uncrewed aerial vehicle, a train, a truck, a lorry, and the like), a smart manufacturing device (including but not limited to a robot, an industrial device, smart logistics, a smart factory, and the like), a computer device (including but not limited to a desktop, a personal computer, a servers, and the like), a portable electronic device (including but not limited to a mobile phone, a tablet, a palmtop computer, a headset, a speaker, a wearable device (for example, a smart watch), a vehicle-mounted device, a virtual reality device, an augmented reality device, and the like).

The terms "component", "module", and "system" and the like used in this specification indicate computer-related entities, hardware, firmware, combinations of hardware and software, software, or software being executed. For example, the component may be but is not limited to a process that is run on a processor, a processor, an object, an executable file, an execution thread, a program, and/or a computer. As shown in the figures, both a computing device and an application that runs on the computing device may be components. One or more components may reside within the process and/or the execution thread, and the component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network, for example, the Internet interacting with other systems by using the signal).

A person of ordinary skill in the art may be aware that, in combination with illustrative logical blocks (illustrative logical blocks) described in embodiments disclosed in this specification and steps (steps) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for detailed working processes of the foregoing systems, apparatuses, and units, refer to corresponding processes in the foregoing method embodiments. Details are not described herein.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of software functional unit and sold or used as an independent product, the functions may be stored in a computer-readable storage medium. Based on such an understanding, the technical solutions of this application essentially, or the part contributing to the conventional technology, or some of the technical solutions may be implemented in a form of software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, like a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A braking system, comprising a first hydraulic apparatus, a second hydraulic apparatus, a first control unit, a second control unit, a third control unit, and a mechanical actuation unit, wherein the first hydraulic apparatus and the second hydraulic apparatus are connected through a hydraulic pipe, the first hydraulic apparatus is configured to brake a first front wheel of a vehicle, the second hydraulic apparatus is configured to brake a second front wheel of the vehicle, and the mechanical actuation unit is configured to brake a rear wheel of the vehicle;
the first control unit is configured to control the first hydraulic apparatus;
the second control unit is configured to control the second hydraulic apparatus; and
the third control unit is configured to control the mechanical actuation unit.

2. The braking system according to claim 1, wherein that the first hydraulic apparatus and the second hydraulic apparatus are connected through a hydraulic pipe comprises:
a first control valve in the first hydraulic apparatus is connected to the second hydraulic apparatus through the hydraulic pipe; or
the first hydraulic apparatus is connected to a second control valve in the second hydraulic apparatus through the hydraulic pipe; or
a first control valve in the first hydraulic apparatus is connected to a second control valve in the second hydraulic apparatus through the hydraulic pipe.

3. The braking system according to claim 2, wherein
that the first control unit controls the first hydraulic apparatus comprises: the first control unit controls the first control valve to close; and/or
that the second control unit controls the second hydraulic apparatus comprises: the second control unit controls the second control valve to close.

4. The braking system according to any one of claims 1 to 3, wherein
the second control unit is further configured to control the first hydraulic apparatus and the second hydraulic apparatus when the first control unit fails.

5. The braking system according to claim 4, wherein the first hydraulic apparatus comprises a third control valve, the third control valve comprises dual coils, one coil in the dual coils is connected to the first control unit, and the other coil in the dual coils is connected to the second control unit; and
that the second control unit controls the first hydraulic apparatus when the first control unit fails comprises:
when the first control unit fails, the second control unit controls the third control valve to close.

6. The braking system according to claim 4, wherein the first control valve in the first hydraulic apparatus comprises dual coils, one coil in the dual coils is connected to the first control unit, and the other coil in the dual coils is connected to the second control unit; and
that the second control unit controls the first hydraulic apparatus when the first control unit fails comprises:
when the first control unit fails, the second control unit controls the first control valve to close.

7. The braking system according to any one of claims 1 to 6, wherein
the first control unit is further configured to: identify a braking intention of a driver, and send the braking intention to the third control unit; and that the third control unit controls the mechanical actuation unit comprises: the third control unit receives the braking intention from the first control unit, and controls the mechanical actuation unit in response to the braking intention;
or
the second control unit is further configured to: when the first control unit fails, identify a braking intention of a driver, and send the braking intention to the third control unit; and that the third control unit controls the mechanical actuation unit comprises: the third control unit receives the braking intention from the second control unit, and controls the mechanical actuation unit in response to the braking intention.

8. The braking system according to claim 7, wherein
that the first control unit identifies a braking intention of a driver comprises: the first control unit obtains a first sensor signal of a braking pedal in the braking system, and identifies the braking intention based on the first sensor signal; or
that the first control unit identifies a braking intention of a driver comprises: the first control unit obtains a first sensor signal of a braking pedal, receives a second sensor signal, and identifies the braking intention based on the first sensor signal and the second sensor signal, wherein the second sensor signal is collected by the second control unit at the braking pedal in the braking system.

9. The braking system according to claim 7, wherein
that the second control unit identifies a braking intention of a driver when the first control unit fails comprises:
when the first control unit fails, the second control unit obtains a second sensor signal of a braking pedal in the braking system, and identifies the braking intention based on the second sensor signal.

10. The braking system according to any one of claims 1 to 9, wherein the third control unit comprises a controller of the vehicle.

11. The braking system according to any one of claims 1 to 10, wherein the third control unit and the mechanical actuation unit are integrated or disposed independently.

12. The braking system according to any one of claims 1 to 11, wherein the system further comprises an oil can, a master cylinder module, the braking pedal, a push rod, and a pedal simulator, wherein
the braking pedal is connected to the master cylinder module through the push rod, one end of the master cylinder module is connected to the oil can through a hydraulic pipe, the other end of the master cylinder module is separately connected to the first hydraulic apparatus and the second hydraulic apparatus through hydraulic pipes, one end of the pedal simulator is connected to the oil can through a hydraulic pipe, and the other end of the pedal simulator is connected to the master cylinder module through a hydraulic pipe; and
the first hydraulic apparatus or the second hydraulic apparatus is further configured to control oil in the master cylinder module to flow into the pedal simulator.

13. The braking system according to any one of claims 1 to 12, wherein the system further comprises the pedal simulator, and the pedal simulator is integrated into the first hydraulic apparatus or the second hydraulic apparatus, or the pedal simulator is disposed independently of the first hydraulic apparatus and the second hydraulic apparatus.

14. The braking system according to any one of claims 1 to 13, wherein a pressure building manner of the first hydraulic apparatus controlled by the first control unit is the same as or different from a pressure building manner of the second hydraulic apparatus controlled by the second control unit.

15. The braking system according to claim 14, wherein the pressure building manner comprises unidirectional pressure building or bidirectional pressure building.

16. A hydraulic apparatus, comprising a booster, wherein the booster comprises a first interface, a second interface, a third interface, and a fourth interface; and
the first interface is configured to connect the booster to a wheel cylinder, the second interface is configured to connect the booster to a master cylinder, the third interface is configured to connect the booster to an oil can, and the fourth interface is configured to connect the booster to another hydraulic apparatus.

17. The hydraulic apparatus according to claim 16, wherein the booster comprises a motor, an electric cylinder, a piston, a control valve MC-NO1, an electric cylinder normally closed valve PNC1, and a booster valve ISO, wherein the booster valve ISO is connected to the control valve MC-NO1, one end of the electric cylinder normally closed valve PNC1 is separately connected to the booster valve ISO and the control valve MC-NO1, and the other end of the electric cylinder normally closed valve PNC1 is connected to the electric cylinder; and the motor is connected to the electric cylinder, the piston is disposed in the electric cylinder, and the motor is configured to control the piston to move in the electric cylinder;
that the first interface is configured to connect the booster to a wheel cylinder comprises: the booster valve ISO is connected to the wheel cylinder through the first interface;
that the second interface is configured to connect the booster to a master cylinder comprises: the control valve MC-NO1 is connected to the master cylinder through the second interface;
that the third interface is configured to connect the booster to an oil can comprises: the electric cylinder is connected to the oil can through the third interface; and
that the fourth interface is configured to connect the booster to another hydraulic apparatus comprises: the control valve MC-NO1 is connected to the another hydraulic apparatus through the fourth interface.

18. The hydraulic apparatus according to claim 16, wherein the booster comprises a motor, an electric cylinder, a piston, a first control valve HCU-NO1, a third control valve MC-NO1, an electric cylinder normally closed valve PNC1, and a booster valve ISO, wherein
the booster valve ISO is separately connected to the first control valve HCU-NO1 and the third control valve MC-NO1, one end of the electric cylinder normally closed valve PNC1 is separately connected to the booster valve ISO, the first control valve HCU-NO1, and the third control valve MC-NO1, and the other end of the electric cylinder normally closed valve PNC1 is connected to the electric cylinder; and the motor is connected to the electric cylinder, the piston is disposed in the electric cylinder, and the motor is configured to control the piston to move in the electric cylinder;
that the first interface is configured to connect the booster to a wheel cylinder comprises: the booster valve ISO is connected to the wheel cylinder through the first interface;
that the second interface is configured to connect the booster to a master cylinder comprises: the third control valve MC-NO1 is connected to the master cylinder through the second interface;
that the third interface is configured to connect the booster to an oil can comprises: the electric cylinder is connected to the oil can through the third interface; and
that the fourth interface is configured to connect the booster to another hydraulic apparatus comprises: the first control valve HCU-NO1 is connected to the another hydraulic apparatus through the fourth interface.

19. The hydraulic apparatus according to any one of claims 16 to 18, wherein the hydraulic apparatus further comprises a braking circuit pressure sensor BCPS, a motor position sensor MPS, and a pressure reducing valve; and
the braking circuit pressure sensor BCPS is connected to the electric cylinder, the motor position sensor MPS is connected to the motor, and the pressure reducing valve is connected to the wheel cylinder.

20. A vehicle, comprising the braking system according to any one of claims 1 to 15 or the hydraulic apparatus according to any one of claims 16 to 19.

21. A control method, applied to a braking system, wherein the braking system comprises a first hydraulic apparatus, a second hydraulic apparatus, a first control unit, and a second control unit, wherein the first control unit is configured to control the first hydraulic apparatus, the second control unit is configured to control the second hydraulic apparatus, the first hydraulic apparatus and the second hydraulic apparatus are connected through a hydraulic pipe, the first hydraulic apparatus is configured to brake a first front wheel of a vehicle, and the second hydraulic apparatus is configured to brake a second front wheel of the vehicle; and
the method comprises:
when the first control unit fails, controlling, by the second control unit, the first hydraulic apparatus and the second hydraulic apparatus to complete braking operations on the first front wheel and the second front wheel.

22. The method according to claim 21, wherein that the first hydraulic apparatus and the second hydraulic apparatus are connected through a hydraulic pipe comprises:
connecting a first control valve in the first hydraulic apparatus to a second control valve in the second hydraulic apparatus through the hydraulic pipe.

23. The method according to claim 21 or 22, wherein the first control valve in the first hydraulic apparatus comprises dual coils, one coil in the dual coils is connected to the first control unit, and the other coil in the dual coils is connected to the second control unit; and
the controlling, by the second control unit, the first hydraulic apparatus and the second hydraulic apparatus comprises:
controlling, by the second control unit, the first control valve and the second control valve that is in the second hydraulic apparatus to close.

24. The method according to claim 21 or 22, wherein a third control valve in the first hydraulic apparatus comprises dual coils, one coil in the dual coils is connected to the first control unit, and the other coil in the dual coils is connected to the second control unit; and
the controlling, by the second control unit, the first hydraulic apparatus and the second hydraulic apparatus comprises:
controlling, by the second control unit, the third control valve and the second control valve that is in the second hydraulic apparatus to close.

25. The method according to any one of claims 21 to 24, wherein the braking system further comprises a third control unit and a mechanical actuation unit, the third control unit is configured to control the mechanical actuation unit, and the mechanical actuation unit is configured to brake a rear wheel of the vehicle; and
the method further comprises:
identifying, by the first control unit, a braking intention of a driver, and sending the braking intention to the third control unit; or
when the first control unit fails, identifying, by the second control unit, a braking intention of a driver, and sending the braking intention to the third control unit.

26. A control apparatus, comprising at least one processor, wherein the at least one processor is coupled to at least one memory, and the at least one processor is configured to execute a computer program or instructions stored in the at least one memory, to enable the apparatus to perform the method according to any one of claims 21 to 25.

27. A computer-readable storage medium, wherein the computer-readable storage medium stores a computer program or instructions, and when a computer reads and executes the computer program or the instructions, the computer is enabled to perform the method according to any one of claims 21 to 25.
